(19) Europäisches Patentamt
European Patent Office
Office européen des brevets

(11) EP 4 773 297 A1

(12) **EUROPEAN PATENT APPLICATION**
published in accordance with Art. 153(4) EPC

(43) Date of publication:
**08.07.2026 Bulletin 2026/28**

(21) Application number: **24874748.7**

(22) Date of filing: **04.10.2024**

(51) International Patent Classification (IPC):
***H01M 10/0567*** (2010.01) ***H01M 10/052*** (2010.01)
***H01M 10/0568*** (2010.01) ***H01M 10/0569*** (2010.01)

(52) Cooperative Patent Classification (CPC):
**H01M 10/052; H01M 10/0567; H01M 10/0568; H01M 10/0569;** Y02E 60/10

(86) International application number:
**PCT/JP2024/035625**

(87) International publication number:
**WO 2025/075148 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.10.2023 JP 2023174648**

(71) Applicant: **Central Glass Company, Limited**
**Ube-shi, Yamaguchi 755-0001 (JP)**

(72) Inventors:
- **KAWABATA, Wataru**
  **Tokyo 101-0054 (JP)**
- **TAKAHASHI, Mikihiro**
  **Tokyo 101-0054 (JP)**
- **KUBO, Kenji**
  **Tokyo 101-0054 (JP)**
- **MORI, Katsumasa**
  **Tokyo 101-0054 (JP)**
- **MASUCHI, Ryusei**
  **Tokyo 101-0054 (JP)**
- **MORINAKA, Takayoshi**
  **Tokyo 101-0054 (JP)**

(74) Representative: **Manitz Finsterwald**
**Patent- und Rechtsanwaltspartnerschaft mbB**
**Martin-Greif-Straße 1**
**80336 München (DE)**

(54) **NONAQUEOUS ELECTROLYTE AND NONAQUEOUS ELECTROLYTE BATTERY**

(57) A nonaqueous electrolyte solution capable of exhibiting an excellent normal-temperature cycle characteristic and a low-temperature input characteristic after a cycle test when used in a nonaqueous electrolyte solution battery and a nonaqueous electrolyte solution battery are provided. A nonaqueous electrolyte solution containing (1) at least one compound selected from the group consisting of a monofluorophosphate salt, a difluorophosphate salt, a monofluorosulfonate salt, a salt represented by the general formula (1) described in the specification, and a salt represented by the general formula (2) described in the specification, (II) a solute, (III) a nonaqueous organic solvent, and (IV) a compound represented by the general formula (3) described in the specification, and a nonaqueous electrolyte solution battery including the nonaqueous electrolyte solution.



Processed by Luminess, 75001 PARIS (FR)

## Description

TECHNICAL FIELD

The present disclosure relates to a nonaqueous electrolyte solution and a nonaqueous electrolyte solution battery.

BACKGROUND ART

In recent years, there is a rapidly increasing demand for batteries that have a high capacity, high output, and a high energy density and that can be mounted as an auxiliary power source for electric vehicles, hybrid vehicles, and fuel-cell vehicles in addition to a power storage system for a compact and high energy density application, such as information-related devices and communication devices, that is, personal computers, video cameras, digital cameras, mobile phones, and smartphones. In addition, there is an increasing demand for batteries that can be used for a long period of time even in power storage systems for large and power applications such as power storage. Nonaqueous electrolyte solution batteries such as lithium ion batteries have been actively developed as candidates for these various power storage systems. A nonaqueous electrolyte solution battery generally includes a positive electrode, a negative electrode, a separator, and a nonaqueous electrolyte solution.

As measures for improving the durability such as cycle characteristics and high-temperature storage characteristics of a nonaqueous electrolyte solution battery, optimization of various constituting elements of the battery including active materials of a positive electrode and a negative electrode has been hitherto studied. Techniques relating to a nonaqueous electrolyte solution have also been studied, and use of a variety of additives to prevent deterioration of a nonaqueous electrolyte solution at surfaces of active positive and negative electrodes due to decomposition of the nonaqueous electrolyte solution has been proposed.

PTL 1 discloses that storage characteristic is improved using a nonaqueous electrolyte solution containing lithium monofluorophosphate or lithium difluorophosphate.

PTL 2 discloses that the initial charge/discharge capacity, the input-output characteristic, and the impedance characteristic are improved using a nonaqueous electrolyte solution which contains $LiPF_6$ and a fluorosulfonate as main electrolytes and in which the ratio thereof is in a predetermined range.

PTL 3 discloses a nonaqueous electrolyte solution containing a phosphorus or boron complex, such as lithium difluorooxalatoborate, and the like, and PTL 4 discloses an electrolyte solution which contains both a difluoro(bisoxalato) phosphate and a tetrafluoro(oxalato)phosphate and which can thus improve the low-temperature characteristic at 0°C or lower as well as the cycle characteristic and the high-temperature storage characteristic.

PTL 5 discloses that, using a nonaqueous electrolyte solution containing an imide salt having a fluorophosphoryl structure and/or a fluorosulfonyl structure of a specific structure together with a silane compound having a predetermined structure, a high average discharge voltage and an excellent low-temperature output characteristic at -30°C or lower and an excellent cycle characteristic and a storage characteristic at a high temperature of 50°C or higher are exhibited.

PTL 6 discloses that an electrolyte solution and a battery have an excellent combustion-inhibiting effect when a nonaqueous electrolyte solution containing a phosphine oxide compound having a P-F bond and/or a $P\text{-}NH_2$ bond together with a supporting salt is used.

PTL 7 discloses that a nonaqueous electrolyte solution containing a small amount of $FSO_2NH_2$ functions as a resistance-reducing agent for a battery.

CITATION LIST

PATENT LITERATURE

PTL 1: JPH11-067270A

PTL 2: JP2013-152956A

PTL 3: JP2002-110235A

PTL 4: JP2011-222193A

PTL 5: JP2016-157679A

PTL 6: WO2005/104289

PTL 7: JP2020-087825A

## SUMMARY OF INVENTION

### TECHNICAL PROBLEM

However, as a result of studies by the present inventors, it has been found that, when the nonaqueous electrolyte solutions containing the additives shown in PTLs 1 to 3 and 5 to 7 are used, there is room for improvement in the normal-temperature cycle characteristic. In addition, it has been found that, also when the nonaqueous electrolyte solution containing the additive shown in PTL 4 is used, there is room for improvement in the low-temperature input characteristic after a cycle test.

The present disclosure has been made in view of the above circumstances, and an object thereof is to provide a nonaqueous electrolyte solution capable of exhibiting an excellent normal-temperature cycle characteristic and a low-temperature input characteristic after a cycle test when used for a nonaqueous electrolyte solution battery and a nonaqueous electrolyte solution battery.

### SOLUTION TO PROBLEM

As a result of intensive studies to solve such a problem, the present disclosers have found that, when a specific salt and a fluorine-containing compound having a specific structure are contained in a nonaqueous electrolyte solution for a nonaqueous electrolyte solution battery containing a nonaqueous organic solvent and a solute, an excellent normal-temperature cycle characteristic and a low-temperature input characteristic after a cycle test can be exhibited when the electrolyte solution is used for a nonaqueous electrolyte solution battery. Specifically, the above problem can be solved by the following configuration.

[1] A nonaqueous electrolyte solution, containing:

(I) at least one compound selected from the group consisting of a monofluorophosphate salt, a difluorophosphate salt, a monofluorosulfonate salt, a salt represented by the following general formula (1), and a salt represented by the following general formula (2);
(II) a solute;
(III) a nonaqueous organic solvent; and
(IV) a compound represented by the following general formula (3).

[Chem. 1]

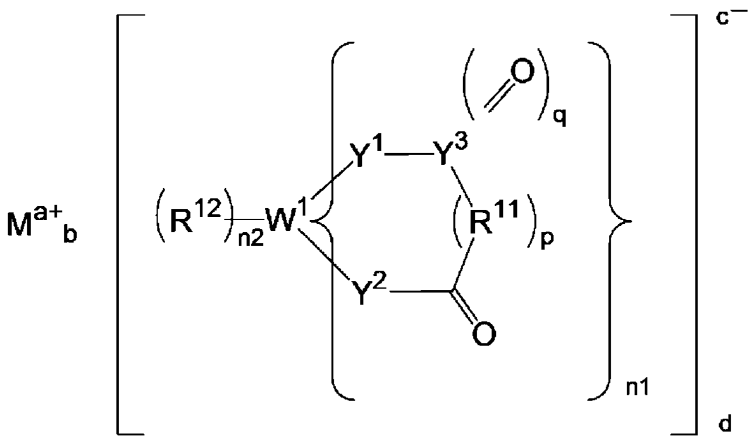

(1)

In the general formula (1), $W^1$ represents a boron atom, a phosphorus atom, or a silicon atom. n1 is 1 to 3. n2 is 0 to 4. p is 0 or 1. $R^{11}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof, and when n1 is 2 or more, the

n1 $R^{11}$'s may be bonded to each other), and $R^{12}$ represents a halogen atom. $Y^1$ and $Y^2$ each independently represent an oxygen atom or a sulfur atom, and $Y^3$ represents a carbon atom or a sulfur atom. q oxo groups (=O) are bonded to the carbon atom or the sulfur atom represented by $Y^3$. q is 1 when $Y^3$ is a carbon atom, and q is 1 or 2 when $Y^3$ is a sulfur atom. $M^{a+}$ represents an alkali metal cation, an alkaline earth metal cation, or an onium cation, and a represents a valence of a corresponding cation. a to d are each 1 or 2 and satisfy $a \times b = c \times d$.

[Chem. 2]

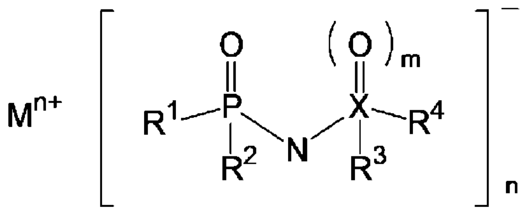

(2)

In the general formula (2), $M^{n+}$ is an alkali metal cation, an alkaline earth metal cation, or an onium cation, and n is an integer equal to a valence of a corresponding cation. X is a sulfur atom or a phosphorus atom. When X is a sulfur atom, m is 2, and $R^4$ does not exist, and when X is a phosphorus atom, m is 1. $R^1$, $R^2$, $R^3$, and $R^4$ are each independently a fluorine atom or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and a fluorine atom, an oxygen atom, and/or an unsaturated bond may be present in the organic group.

[Chem. 3]

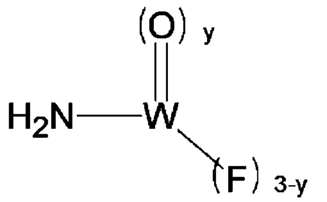

(3)

In the general formula (3), W is a phosphorus atom or a sulfur atom. When W is a phosphorus atom, y is 1, and when W is a sulfur atom, y is 2.

The nonaqueous electrolyte solution according to [1], in which (IV)/{(1)+(IV)}, which is a mass ratio of a content of the (IV) to a total amount of the (I) and the (IV), is 0.00019 to 0.99.

The nonaqueous electrolyte solution according to [1] or [2], in which the salt represented by the general formula (1) is at least one selected from the group consisting of a bis(oxalato)borate salt, a difluoro(oxalato)borate salt, a tris(oxalato)phosphate salt, a difluorobis(oxalato)phosphate salt, and a tetrafluoro(oxalato)phosphate salt.

The nonaqueous electrolyte solution according to any one of [1] to [3], in which the salt represented by the general formula (2) has at least one P-F bond or S-F bond.

The nonaqueous electrolyte solution according to any one of [1] to [4], in which a cation of the salt of the (I) is a lithium ion, a sodium ion, a potassium ion, or a tetraalkylammonium ion.

The nonaqueous electrolyte solution according to any one of [1] to [5], in which the (II) is at least one selected from the group consisting of $LiPF_6$, $LiBF_4$, $LiSbF_6$, $LiAsF_6$, $LiClO_4$, $LiCF_3SO_3$, $LiC_4F_9SO_3$, $LiN(SO_2F)_2$, $LiAlO_2$, $LiAlCl_4$, LiCl, and LiI, or at least one selected from the group consisting of $NaPF_6$, $NaBF_4$, $NaSbF_6$, $NaAsF_6$, $NaClO_4$, $NaCF_3SO_3$, $NaC_4F_9SO_3$, $NaN(SO_2F)_2$, $NaAlO_2$, $NaAlCl_4$, NaCl, and NaI.

The nonaqueous electrolyte solution according to any one of [1] to [6], in which the (III) contains at least one selected from the group consisting of a cyclic ester, an acyclic ester, a cyclic ether, an acyclic ether, a sulfone compound, a sulfoxide compound, and an ionic liquid.

The nonaqueous electrolyte solution according to [7], in which the cyclic ester contains a cyclic carbonate.

The nonaqueous electrolyte solution according to [8], in which the cyclic carbonate contains at least one selected from the group consisting of ethylene carbonate and propylene carbonate.

The nonaqueous electrolyte solution according to [7], in which the acyclic ester contains an acyclic carbonate.

The nonaqueous electrolyte solution according to [10], in which the acyclic carbonate contains at least one

selected from the group consisting of ethyl methyl carbonate, dimethyl carbonate, diethyl carbonate, and methyl propyl carbonate.

The nonaqueous electrolyte solution according to any one of [1] to [11], further containing at least one selected from the group consisting of vinylene carbonate, fluoroethylene carbonate, a nitrate salt, 1,3-propenesultone, 1,3-propanesultone, 1,6-diisocyanatohexane, dimethyl dicarbonate, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoyl fluoride), tetravinylsilane, trivinylmethylsilane, t-butylbenzene, t-amylbenzene, fluorobenzene, and cyclohexylbenzene.

A nonaqueous electrolyte solution battery, including at least: a positive electrode; a negative electrode; a separator; and the nonaqueous electrolyte solution according to any one of [1] to [12].

## ADVANTAGEOUS EFFECTS OF INVENTION

According to the present disclosure, a nonaqueous electrolyte solution capable of exhibiting an excellent normal-temperature cycle characteristic and a low-temperature input characteristic after a cycle test when used for a nonaqueous electrolyte solution battery and a nonaqueous electrolyte solution battery can be provided.

## DESCRIPTION OF EMBODIMENTS

The term "to" in the present specification is used with the meanings including the numerical values indicated before and after "to" as a lower limit value and an upper limit value.

Hereinafter, the present disclosure will be described in detail, but the description of the constituent elements described below is an example of an embodiment of the present disclosure, and the present disclosure is not limited to these specific contents.

### 1. Nonaqueous Electrolyte Solution

The nonaqueous electrolyte solution of the present disclosure is a nonaqueous electrolyte solution, containing:

(I) at least one compound selected from the group consisting of a monofluorophosphate salt, a difluorophosphate salt, a monofluorosulfonate salt, a salt represented by the general formula (1), and a salt represented by the general formula (2);
(II) a solute;
(III) a nonaqueous organic solvent; and
(IV) a compound represented by the following general formula (3).

When a nonaqueous electrolyte solution containing both the component (I) and the component (IV) is used in a nonaqueous electrolyte solution battery (for example, a lithium ion battery or a sodium ion battery), the components (I) and (IV) decompose on at least one of the positive electrode and the negative electrode and form a film having excellent cationic conductivity on the surface of at least one of the positive electrode and the negative electrode. It is considered that this film prevents direct contact between the nonaqueous organic solvent or the solute and the electrode active material and reduces the cation dissociation energy of the solute. The present inventors presume that, as a result, an excellent normal-temperature cycle characteristic and a low-temperature input characteristic after a cycle test of a nonaqueous electrolyte solution battery can be exhibited.

### <(I) At Least One Compound Selected from Group Consisting of Monofluorophosphate Salt, Difluorophosphate Salt, Monofluorosulfonate Salt, Salt Represented by General Formula (1), and Salt Represented by General Formula (2)>

The nonaqueous electrolyte solution of the present disclosure contains, as the component (I), at least one compound selected from the group consisting of a monofluorophosphate salt, a difluorophosphate salt, a monofluorosulfonate salt, a salt represented by the general formula (1), and a salt represented by the general formula (2).

### (Monofluorophosphate Salt, Difluorophosphate Salt, and Monofluorosulfonate Salt)

Examples of the cations ($M_1^{n+}$) that the monofluorophosphate salt, the difluorophosphate salt, and the monofluorosulfonate salt have include an alkali metal cation, an alkaline earth metal cation, and an onium cation. The type

thereof is not particularly restricted as long as the performance of the nonaqueous electrolyte solution and the nonaqueous electrolyte solution battery of the present disclosure is not impaired, and various ones can be selected from the above.

When $M_1^{n+}$ represents an alkali metal cation, examples of the alkali metal cation include a lithium ion, a sodium ion, a potassium ion, a rubidium ion, and a cesium ion.

When $M_1^{n+}$ represents an alkaline earth metal cation, examples of the alkaline earth metal cation include a magnesium ion, a calcium ion, and a barium ion.

When $M_1^{n+}$ represents an onium cation, examples of the onium cation include an onium cation such as tetraalkylammonium, tetraalkylphosphonium, and an imidazolium derivative.

n represents the valence of the corresponding cation and may be 1 to 3 or 1 or 2.

Particularly from the viewpoint of playing a role of helping the ionic conduction in a nonaqueous electrolyte solution battery, $M_1^{n+}$ is preferably a lithium ion, a sodium ion, a potassium ion, a tetraalkylammonium ion such as a tetramethylammonium ion and a tetraethylammonium ion, or a tetrabutylphosphonium ion, and more preferably a lithium ion, a sodium ion, a potassium ion, or a tetraalkylammonium ion.

Moreover, $M_1^{n+}$ is more preferably a lithium ion for use for a lithium ion battery application and is more preferably a sodium ion for use for a sodium ion battery application.

(Salt Represented by General Formula (1))

[Chem. 4]

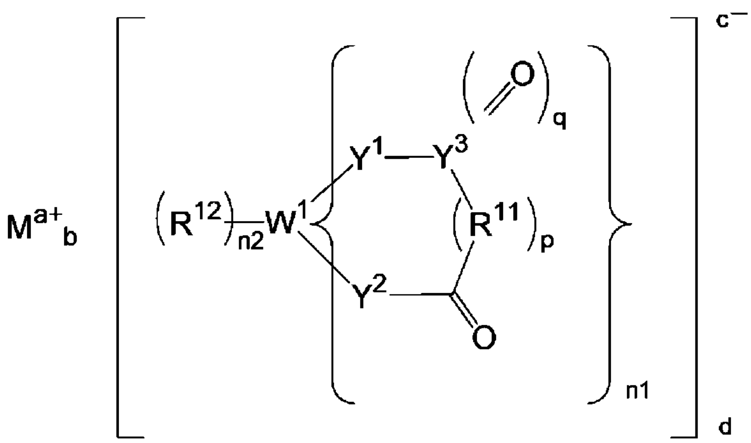

(1)

In the general formula (1), $W^1$ represents a boron atom, a phosphorus atom, or a silicon atom. n1 is 1 to 3. n2 is 0 to 4. p is 0 or 1. $R^{11}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (the groups may contain a substituent or may contain a heteroatom in the structures thereof, and when n1 is 2 or more, the n1 $R^{11}$'s may be bonded to each other), and $R^{12}$ represents a halogen atom. $Y^1$ and $Y^2$ each independently represent an oxygen atom or a sulfur atom, and $Y^3$ represents a carbon atom or a sulfur atom. q oxo groups (=O) are bonded to the carbon atom or the sulfur atom represented by $Y^3$. q is 1 when $Y^3$ is a carbon atom, and q is 1 or 2 when $Y^3$ is a sulfur atom. $M^{a+}$ represents an alkali metal cation, an alkaline earth metal cation, or an onium cation, and a represents a valence of a corresponding cation. a to d are each 1 or 2 and satisfy $a \times b = c \times d$.

$W^1$ represents a boron atom, a phosphorus atom, or a silicon atom and is preferably a boron atom or a phosphorus atom.

The alkylene group represented by $R^{11}$ may be linear or a branched chain. Examples of the alkylene group include an alkylene group having 1 to 10 carbon atoms, such as a methylene group, an ethylene group, an n-propylene group, an isopropylene group, an n-butylene group, and an n-hexylene group.

Examples of the halogenated alkylene group having 1 to 10 carbon atoms represented by $R^{11}$ include a group in which any hydrogen atom of the alkylene group is substituted with a halogen atom.

Examples of the arylene group having 6 to 20 carbon atoms represented by $R^{11}$ include a phenylene group and a naphthylene group.

Examples of the halogenated arylene group having 6 to 20 carbon atoms represented by $R^{11}$ include a group in which any hydrogen atom of the arylene group is substituted with a halogen atom.

$R^{11}$ is preferably a methylene group, an ethylene group, an n-propylene group, a difluoromethylene group, a

tetrafluoroethylene group, or a hexafluoropropylene group, and more preferably a methylene group.

Examples of the halogen atom represented by $R^{12}$ include a fluorine atom, a chlorine atom, and an iodine atom, and a fluorine atom is preferable.

$Y^1$ and $Y^2$ each independently represent an oxygen atom or a sulfur atom, and it is preferable that both are oxygen atoms.

$Y^3$ represents a carbon atom or a sulfur atom and is preferably a carbon atom.

Examples of the alkali metal cation, the alkaline earth metal cation, and the onium cation represented by $M^{a+}$ include the alkali metal cations, the alkaline earth metal cations, and the onium cations listed as $M_1^{n+}$ described above, and specific examples and preferable examples thereof are also the same.

Examples of the compound represented by the general formula (1) include a bis(oxalato)borate salt, a difluoro(oxalato)borate salt, a tris(oxalato)phosphate salt, a difluorobis(oxalato)phosphate salt, a tetrafluoro(oxalato)phosphate salt, a tris(oxalato)silicate salt, a difluorobis(oxalato)silicate salt, a difluoro(malonato)borate salt, a tetrafluoro(malonato)phosphate salt, a difluoro(sulfoacetato)borate salt, a difluoro(maleato)borate salt, and a difluoro(fumarato)borate salt.

The salt represented by the general formula (1) is preferably at least one selected from the group consisting of a bis(oxalato)borate salt, a difluoro(oxalato)borate salt, a tris(oxalato)phosphate salt, a difluorobis(oxalato)phosphate salt, and a tetrafluoro(oxalato)phosphate salt, and more preferably at least one selected from the group consisting of lithium bis(oxalato)borate, lithium difluoro(oxalato)borate, lithium tris(oxalato)phosphate, lithium difluorobis(oxalato)phosphate, and lithium tetrafluoro(oxalato)phosphate.

(Salt Represented by General Formula (2))

[Chem. 5]

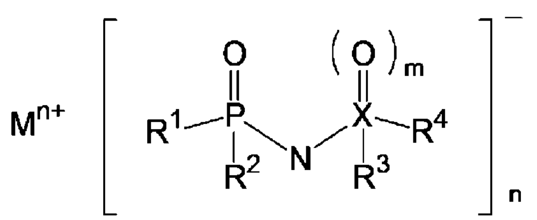

(2)

In the general formula (2), $M^{n+}$ is an alkali metal cation, an alkaline earth metal cation, or an onium cation, and n is an integer equal to a valence of a corresponding cation. X is a sulfur atom or a phosphorus atom. When X is a sulfur atom, m is 2, and $R^4$ does not exist, and when X is a phosphorus atom, m is 1. $R^1$, $R^2$, $R^3$, and $R^4$ are each independently a fluorine atom or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and a fluorine atom, an oxygen atom, and/or an unsaturated bond may be present in the organic group.

In the general formula (2), $M^{n+}$ has the same meanings as $M_1^{n+}$ described above, and specific examples and preferable examples thereof are also the same.

In the general formula (2), $R^1$ to $R^4$ are each independently a fluorine atom or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and a fluorine atom, an oxygen atom, and/or an unsaturated bond may be present in the organic group.

The organic group may contain a substituent in the structure thereof.

The alkyl group represented by $R^1$ to $R^4$ may be linear or a branched chain, and examples thereof include an alkyl group and a fluorine-containing alkyl group, each of which has 1 to 10 carbon atoms, such as a methyl group, an ethyl group, a propyl group, an isopropyl group, a butyl group, a sec-butyl group, a tert-butyl group, a pentyl group, a trifluoromethyl group, a 2,2-difluoroethyl group, a 2,2,2-trifluoroethyl group, a 2,2,3,3-tetrafluoropropyl group, and a

1,1,1,3,3,3-hexafluoroisopropyl group.

The alkoxy group represented by $R^1$ to $R^4$ may be linear or a branched chain, and examples thereof include an alkoxy group and a fluorine-containing alkoxy group, each of which has 1 to 10 carbon atoms, such as a methoxy group, an ethoxy group, a propoxy group, an isopropoxy group, a butoxy group, a sec-butoxy group, a tert-butoxy group, a pentyloxy group, a trifluoromethoxy group, a 2,2-difluoroethoxy group, a 2,2,2-trifluoroethoxy group, a 2,2,3,3-tetrafluoropropoxy group, a 1,1,1-trifluoroisopropoxy group, and a 1,1,1,3,3,3-hexafluoroisopropoxy group.

The alkenyl group represented by $R^1$ to $R^4$ may be linear or a branched chain, and examples thereof include an alkenyl group and a fluorine-containing alkenyl group, each of which has 2 to 10 carbon atoms, such as a vinyl group, a 1-propenyl group, a 2-propenyl group, an isopropenyl group, a 2-butenyl group, a 3-butenyl group, and a 1,3-butadienyl group.

The alkenyloxy group represented by $R^1$ to $R^4$ may be linear or a branched chain, and examples thereof include an alkenyloxy group and a fluorine-containing alkenyloxy group, each of which has 2 to 10 carbon atoms, such as a vinyloxy group, a 1-propenyloxy group, a 2-propenyloxy group, an isopropenyloxy group, a 2-butenyloxy group, a 3-butenyloxy group, and a 1,3-butadienyloxy group.

The alkynyl group represented by $R^1$ to $R^4$ may be linear or a branched chain, and examples thereof include an alkynyl group and a fluorine-containing alkynyl group, each of which has 2 to 10 carbon atoms, such as an ethynyl group, a 2-propynyl group, and a 1,1-dimethyl-2-propynyl group.

The alkynyloxy group represented by $R^1$ to $R^4$ may be linear or a branched chain, and examples thereof include an alkynyloxy group and a fluorine-containing alkynyloxy group, each of which has 2 to 10 carbon atoms, such as an ethynyloxy group, a 2-propynyloxy group, and a 1,1-dimethyl-2-propynyloxy group.

Examples of the cycloalkyl group represented by $R^1$ to $R^4$ include a cycloalkyl group and a fluorine-containing cycloalkyl group, each of which has 3 to 10 carbon atoms, such as a cyclopentyl group and a cyclohexyl group.

Examples of the cycloalkoxy group represented by $R^1$ to $R^4$ include a cycloalkoxy group and a fluorine-containing cycloalkoxy group, each of which has 3 to 10 carbon atoms, such as a cyclopentyloxy group and a cyclohexyloxy group.

Examples of the cycloalkenyl group represented by $R^1$ to $R^4$ include a cycloalkenyl group and a fluorine-containing cycloalkenyl group, each of which has 3 to 10 carbon atoms, such as a cyclopentenyl group and a cyclohexenyl group.

Examples of the cycloalkenyloxy group represented by $R^1$ to $R^4$ include a cycloalkenyloxy group and a fluorine-containing cycloalkenyloxy group, each of which has 3 to 10 carbon atoms, such as a cyclopentenyloxy group and a cyclohexenyloxy group.

Examples of the aryl group represented by $R^1$ to $R^4$ include an aryl group and a fluorine-containing aryl group, each of which has 6 to 10 carbon atoms, such as a phenyl group, a tolyl group, and a xylyl group.

Examples of the aryloxy group represented by $R^1$ to $R^4$ include an aryloxy group and a fluorine-containing aryloxy group, each of which has 6 to 10 carbon atoms, such as a phenyloxy group, a tolyloxy group, and a xylyloxy group.

At least one of $R^1$ to $R^4$ preferably represents a fluorine atom. That is, the salt represented by the general formula (2) preferably has at least one P-F bond or S-F bond.

$R^1$ to $R^4$ are each independently preferably a fluorine atom or an alkyl group containing a fluorine atom because the ionic conductivity in a solution or a composition increases due to improvement of the ion dissociation degree due to the strong electron-withdrawing property thereof. Furthermore, a fluorine atom is more preferable because the ionic conductivity in a solution or a composition becomes very high due to the effect of improvement of the mobility due to a decrease in anion size.

Moreover, $R^1$ to $R^4$ preferably have 6 or less carbon atoms because the ionic conductivity tends to be relatively high. The number of carbon atoms is more preferably 1 to 4, and the number of carbon atoms is further preferably 1 to 3. Specific examples thereof include a trifluoromethyl group and a pentafluoroethyl group, and a trifluoromethyl group, which has a small anion size, is particularly preferable.

Specific examples of the anion structure of the salt represented by the general formula (2) are shown below, but the anion structure is not limited thereto.

[Chem. 6]

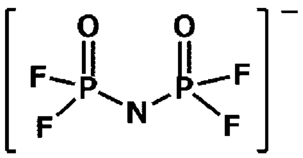

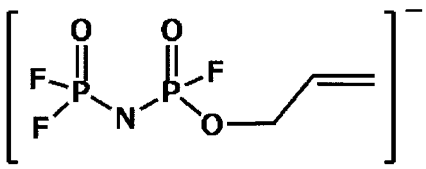

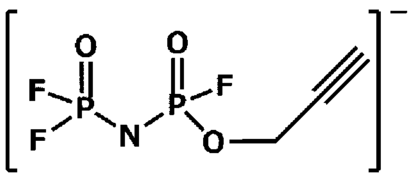

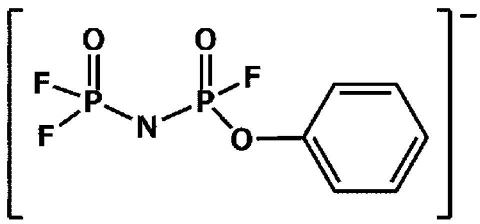

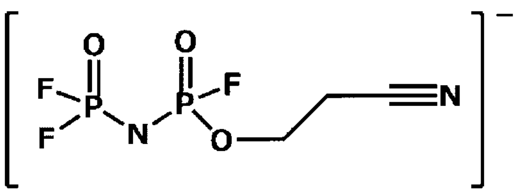

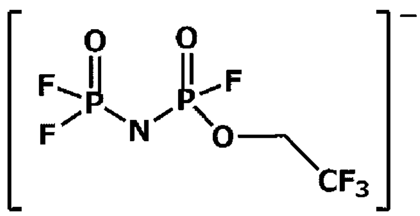

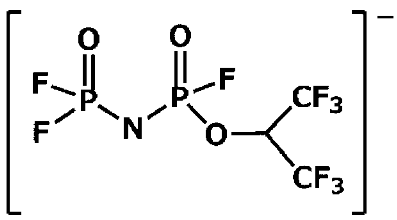

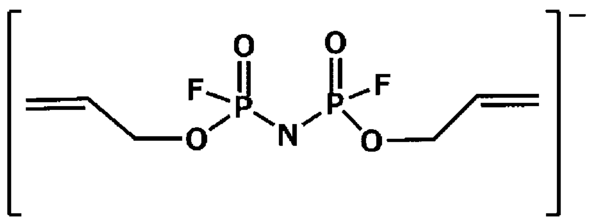

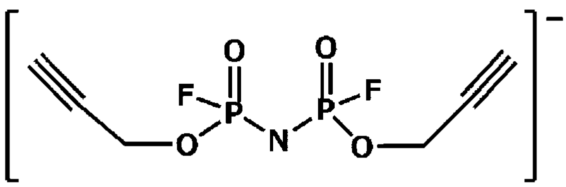

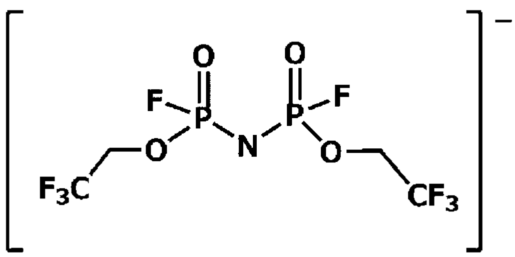

[Chem. 7]

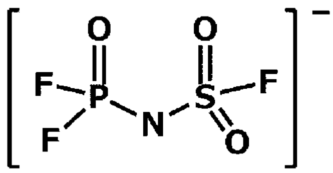

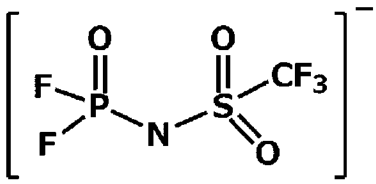

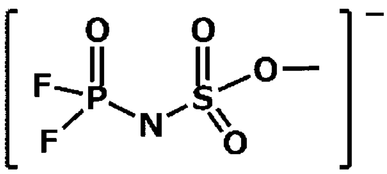

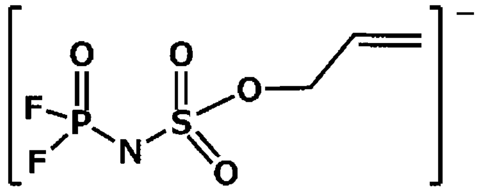

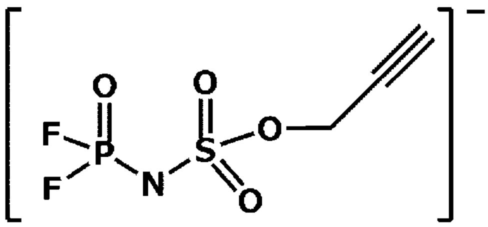

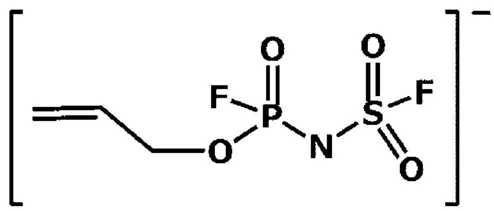

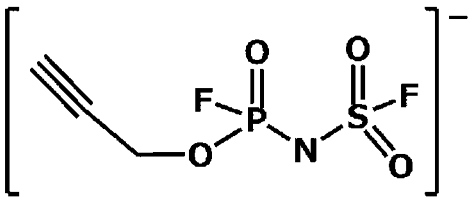

The salt represented by the general formula (2) is preferably at least one compound selected from the group consisting of a (fluorosulfonyl)(difluorophosphoryl)imide salt and a bis(difluorophosphoryl)imide salt, and more preferably lithium (fluorosulfonyl)(difluorophosphoryl)imide or lithium bis(difluorophosphoryl)imide.

As shown for each of the monofluorophosphate salt, the difluorophosphate salt, the monofluorosulfonate salt, the salt represented by the general formula (1), and the salt represented by the general formula (2), the cations of the salts, namely the cations of the salts shown in (I), are preferably a lithium ion, a sodium ion, a potassium ion, or a tetraalkylammonium ion.

In the nonaqueous electrolyte solution of the present disclosure, one type of compound may be used alone as (I), or two or more types of compound may be mixed and used in any combination and any ratio according to the application.

In the nonaqueous electrolyte solution of the present disclosure, the content of (I) with respect to the total amount of the nonaqueous electrolyte solution (also referred to as "concentration of (I)") may be 0.01% by mass or more and 10% by mass or less.

The lower limit of the concentration of (I) may be 0.08% by mass or more, may be 0.1% by mass or more, may be 0.15% by mass or more, may be 0.3% by mass or more, may be 0.45% by mass or more, may be 0.5% by mass or more, may be 0.7% by mass or more, or may be 0.8% by mass or more. The upper limit of the concentration of (I) may be 8% by mass or less, may be 5% by mass or less, may be 4% by mass or less, may be 3% by mass or less, or may be 1.5% by mass or less.

<(II) Solute>

The (II) solute (also referred to as "(11)") contained in the nonaqueous electrolyte solution of the present disclosure will be explained.

The (11) solute is not particularly limited and may be, for example, at least one selected from the group consisting

of $LiPF_6$, $LiBF_4$, $LiSbF_6$, $LiAsF_6$, $LiClO_4$, $LiCF_3SO_3$, $LiC_4F_9SO_3$, $LiN(SO_2F)_2$, $LiAlO_2$, $LiAlCl_4$, LiCl, and LiI, or at least one selected from the group consisting of $NaPF_6$, $NaBF_4$, $NaSbF_6$, $NaAsF_6$, $NaClO_4$, $NaCF_3SO_3$, $NaC_4F_9SO_3$, $NaN(SO_2F)_2$, $NaAlO_2$, $NaAlCl_4$, NaCl, and NaI.

In the nonaqueous electrolyte solution of the present disclosure, one type of compound may be used alone as (II), or two or more types of compound may be mixed and used in any combination and any ratio according to the application.

The concentration of (II) with respect to the total amount of the nonaqueous electrolyte solution is not particularly restricted. For example, the lower limit of the concentration of (II) may be 0.5 mol/L or more, may be 0.7 mol/L or more, or may be 0.9 mol/L or more. The upper limit of the concentration of (II) may be 5 mol/L or less, may be 4 mol/L or less, or may be 2 mol/L or less.

The liquid temperature for dissolving (II) in (III) a nonaqueous organic solvent is not particularly limited but may be -20 to 80°C or 0 to 60°C.

<(III) Nonaqueous Organic Solvent>

The (III) nonaqueous organic solvent (also referred to as "(III)") contained in the nonaqueous electrolyte solution of the present disclosure will be explained. The type of the (III) nonaqueous organic solvent is not particularly limited, and any nonaqueous organic solvent can be used.

Specific examples of the (III) nonaqueous organic solvent include the following nonaqueous organic solvents.

Examples of the cyclic ester include cyclic carbonates such as propylene carbonate (hereinafter, sometimes referred to as "PC"), ethylene carbonate (hereinafter, sometimes referred to as "EC"), and butylene carbonate, as well as γ-butyrolactone and γ-valerolactone.

Examples of the acyclic ester include acyclic carbonates such as diethyl carbonate (hereinafter, sometimes referred to as "DEC"), dimethyl carbonate (hereinafter, sometimes referred to as "DMC"), ethyl methyl carbonate (hereinafter, sometimes referred to as "EMC"), and methyl propyl carbonate, as well as methyl acetate, methyl propionate, and ethyl propionate (hereinafter, sometimes referred to as "EP").

Examples of the cyclic ether include tetrahydrofuran, 2-methyltetrahydrofuran, and dioxane.

Examples of the acyclic ether include dimethoxyethane and diethyl ether.

Other examples include sulfone compounds and sulfoxide compounds such as dimethyl sulfoxide and sulfolane. In addition, an ionic liquid and the like can also be exemplified.

The (III) nonaqueous organic solvent may contain at least one selected from the group consisting of a cyclic ester, an acyclic ester, a cyclic ether, an acyclic ether, a sulfone compound, a sulfoxide compound, and an ionic liquid.

The cyclic ester may contain a cyclic carbonate, and the cyclic carbonate may contain at least one selected from the group consisting of ethylene carbonate and propylene carbonate.

The acyclic ester may contain an acyclic carbonate, and the acyclic carbonate may contain at least one selected from the group consisting of ethyl methyl carbonate, dimethyl carbonate, diethyl carbonate, and methyl propyl carbonate.

In the nonaqueous electrolyte solution of the present disclosure, one type of compound may be used alone as (111), or two or more types of compound may be mixed and used in any combination and any ratio according to the application.

The cyclic carbonate content is not particularly restricted and is any content as long as the effects of the present disclosure are not significantly impaired, but the content in the case where one type is used alone may be 3% by volume or more, or may be more preferably 5% by volume or more in 100% by volume of the nonaqueous organic solvent. Within this range, a decrease in the electric conductivity due to a decrease in the permittivity of the nonaqueous electrolyte solution is avoided, and the large current discharge characteristic of the nonaqueous electrolyte solution battery, the stability with respect to the negative electrode, and the cycle characteristic are easily set in excellent ranges. The content may be 90% by volume or less, may be preferably 85% by volume or less, or may be more preferably 80% by volume or less. Within this range, the viscosity of the nonaqueous electrolyte solution is set in an appropriate range, a decrease in the ionic conductivity is suppressed, and thus the load characteristic of the nonaqueous electrolyte solution battery is easily set in an excellent range.

Moreover, two or more types of cyclic carbonate can be used in any combination. One of preferable combinations is a combination of ethylene carbonate and propylene carbonate. In this case, the volume ratio of ethylene carbonate to propylene carbonate is preferably 99:1 to 40:60 and particularly preferably 95:5 to 50:50. Further, the amount of propylene carbonate in the entire nonaqueous organic solvent is not particularly restricted and is any amount as long as the effects of the present disclosure are not significantly impaired, but the amount may be 1% by volume or more, preferably 2% by volume or more, and more preferably 3% by volume or more and may be 30% by volume or less, preferably 25% by volume or less, and more preferably 20% by volume or less. Propylene carbonate is preferably contained in this range because the low-temperature characteristic is more excellent while the characteristics of the combination of ethylene carbonate and a dialkyl carbonate are maintained.

One type of acyclic ester may be used alone, or two or more types may be used in any combination and at any

ratio.

The acyclic ester content is not particularly limited but may be 15% by volume or more, may be preferably 20% by volume or more, or may be more preferably 25% by volume or more in 100% by volume of the nonaqueous organic solvent. The content may be 90% by volume or less, may be preferably 85% by volume or less, or may be more preferably 80% by volume or less. When the acyclic ester content is in the above range, the viscosity of the nonaqueous electrolyte solution is set in an appropriate range, a decrease in the ionic conductivity is suppressed, and thus the input/output characteristic and the charge-discharge rate characteristic of the nonaqueous electrolyte solution battery are easily set in excellent ranges. In addition, a decrease in the electric conductivity due to a decrease in the permittivity of the nonaqueous electrolyte solution is avoided, and the input/output characteristic and the charge-discharge rate characteristic of the nonaqueous electrolyte solution battery are easily set in excellent ranges.

Further, by combining ethylene carbonate with a specific acyclic ester in a specific content, the battery performance can be significantly improved.

For example, when dimethyl carbonate and ethyl methyl carbonate are selected as specific acyclic esters, the ethylene carbonate content is not particularly restricted and is any content as long as the effects of the present disclosure are not significantly impaired, but the content may be 5% by volume or more and preferably 10% by volume or more, and may be 45% by volume or less and preferably 40% by volume or less. The dimethyl carbonate content may be 20% by volume or more and preferably 30% by volume or more and may be 50% by volume or less and preferably 45% by volume or less. The ethyl methyl carbonate content may be 20% by volume or more and preferably 30% by volume or more and may be 50% by volume or less and preferably 45% by volume or less. When the contents are within the above ranges, the viscosity of the nonaqueous electrolyte solution is decreased, the ionic conductivity is improved, and high input/output is easily obtained even at a low temperature while the low-temperature precipitation temperature of the electrolyte is decreased.

The acyclic ether content is not particularly restricted and is any content as long as the effects of the present disclosure are not significantly impaired, but the content may be 1% by volume or more, preferably 2% by volume or more, and more preferably 3% by volume or more, and may be 30% by volume or less, preferably 25% by volume or less, and more preferably 20% by volume or less in 100% by volume of the nonaqueous organic solvent. When the acyclic ether content is within the above range, it is easy to secure the effect of improving the ionic conductivity of the acyclic ether due to improvement in the lithium ion dissociation degree and a decrease in the viscosity, for example, in the case of a lithium ion battery in which cations are mainly lithium. When the negative electrode active material is a carbonaceous material, the phenomenon in which the acyclic ether is co-intercalated with lithium ions can be suppressed, and thus the input/output characteristic and the charge-discharge rate characteristic are easily set in appropriate ranges.

The sulfone compound content is not particularly restricted and is any content as long as the effects of the present disclosure are not significantly impaired, but the content may be 0.3% by volume or more, preferably 0.5% by volume or more, and more preferably 1% by volume or more, and may be 40% by volume or less, preferably 35% by volume or less, and more preferably 30% by volume or less in 100% by volume of the nonaqueous organic solvent. When the sulfone compound content is within the above range, the effect of improving the durability such as the cycle characteristic and the storage characteristic can be easily obtained, the viscosity of the nonaqueous electrolyte solution can be set in an appropriate range, a decrease in the electric conductivity can be avoided, and the input/output characteristic and the charge-discharge rate characteristic of the nonaqueous electrolyte solution battery are easily set in appropriate ranges.

<(IV) Compound Represented by General Formula (3)>

The nonaqueous electrolyte solution of the present disclosure further contains (IV) a compound represented by the general formula (3) (also referred to as "(IV)").

[Chem. 8]

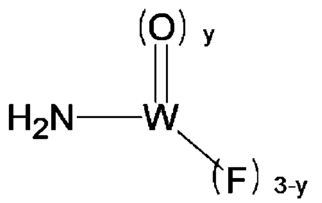

(3)

In the general formula (3), W is a phosphorus atom or a sulfur atom. When W is a phosphorus atom, y is 1, and when W is a sulfur atom, y is 2.

In the nonaqueous electrolyte solution of the present disclosure, one type of compound may be used alone as (IV), or two types of compound may be mixed and used in any ratio according to the application.

In the nonaqueous electrolyte solution of the present disclosure, the content of (IV) with respect to the total amount of the nonaqueous electrolyte solution (also referred to as "concentration of (IV)") may be 0.001% by mass or more and 5% by mass or less. The lower limit of the concentration of (IV) may be 0.005% by mass or more, may be 0.01% by mass or more, may be 0.05% by mass or more, may be 0.08% by mass or more, or may be 0.1% by mass or more. The upper limit of the concentration of (IV) may be 3% by mass or less, may be 2% by mass or less, may be 1% by mass or less, or may be 0.8% by mass or less.

In the nonaqueous electrolyte solution of the present disclosure, (IV)/{(1)+(IV)}, which is the mass ratio of the content of (IV) to the total amount of (I) and (IV), is preferably 0.00019 to 0.99. The lower limit of the ratio may be 0.0002 or more, may be 0.0005 or more, may be 0.0010 or more, may be 0.0100 or more, or may be 0.0500 or more. The upper limit of the ratio may be 0.8, may be 0.6, may be 0.4, or may be 0.2.

<Other Component that May be Contained>

Although the basic configuration of the nonaqueous electrolyte solution of the present disclosure has been explained above, the components explained below (hereinafter also referred to as "other components that may be contained" or "other components") may be contained in the nonaqueous electrolyte solution of the present disclosure in any combination/ratio as long as the gist of the present disclosure is not impaired. For example, an additive or the like which is generally used in this technical field may be added in any ratio as the other component.

Specific examples of the other component include vinylene carbonate, fluoroethylene carbonate, a nitrate salt, 1,3-propenesultone, 1,3-propanesultone, 1,6-diisocyanatohexane, dimethyl dicarbonate, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoyl fluoride), tetravinylsilane, trivinylmethylsilane, t-butylbenzene, t-amylbenzene, fluorobenzene, and cyclohexylbenzene, and at least one selected therefrom is preferably contained.

By adding the other component to the nonaqueous electrolyte solution of the present disclosure, at least one of the overcharge prevention effect, the negative electrode film formation effect, and the positive electrode protection effect may be improved.

When the nonaqueous electrolyte solution of the present disclosure contains the other component, the other component content may be 0.01% by mass or more and 10% by mass or less with respect to the total amount of the nonaqueous electrolyte solution.

Here, of the other components above, the fluoroethylene carbonate content may be 0.01% by mass or more and 55% by mass or less with respect to the total amount of the nonaqueous electrolyte solution.

The nonaqueous electrolyte solution of the present disclosure is suitably used for a nonaqueous electrolyte solution battery (preferably a nonaqueous electrolyte solution secondary battery).

2. Nonaqueous Electrolyte Solution Battery

The nonaqueous electrolyte solution battery of the present disclosure includes, at least, the nonaqueous electrolyte solution of the present disclosure described above, a negative electrode, and a positive electrode. Further, a separator, an exterior body, and the like may be included.

The nonaqueous electrolyte solution battery of the present disclosure preferably includes at least a positive electrode, a negative electrode, a separator, and the nonaqueous electrolyte solution of the present disclosure.

The nonaqueous electrolyte solution battery of the present disclosure is preferably a nonaqueous electrolyte solution secondary battery.

The negative electrode is not particularly limited, but a material capable of reversibly intercalating and deintercalating alkali metal ions such as lithium ions and sodium ions, or alkaline earth metal ions may be used.

For example, in the case of a lithium ion battery in which cations are mainly lithium, the negative electrode active material constituting the negative electrode is one capable of doping and dedoping lithium ions. Examples of the negative electrode active material include a material containing at least one selected from a carbon material in which the d value of the lattice plane (002) plane in X-ray diffraction is 0.340 nm or less, a carbon material in which the d value of the lattice plane (002) plane in X-ray diffraction exceeds 0.340 nm, oxides of one or more metals selected from Si, Sn, and Al, one or more metals selected from Si, Sn, and Al, alloys containing these metals, alloys of the metals or the alloys and lithium, and lithium titanium oxide. One type of these negative electrode active materials can be used alone, or two or more types thereof can be used in combination. Lithium metal, metal nitrides, tin compounds, conductive polymers, and the like may also be used.

For example, in the case of a sodium ion battery in which the cations are mainly sodium, as the negative electrode active material constituting the negative electrode, sodium metal, an alloy of sodium metal and another metal such as tin,

an intermetallic compound of sodium metal and another metal, various carbon materials such as hard carbon, a metal oxide such as titanium oxide, a metal nitride, (elemental) tin, a tin compound, activated carbon, a conductive polymer, and the like may be used. In addition to these, (elemental) phosphorus such as red phosphorus and black phosphorus, phosphorus compounds such as Co-P, Cu-P, Sn-P, Ge-P, and Mo-P, (elemental) antimony, antimony compounds such as Sb/C and Bi-Sb, and the like may be used. One type of these negative electrode active materials may be used alone, or two or more types thereof may be used in combination.

The positive electrode is not particularly limited, but a material capable of reversibly intercalating and deintercalating alkali metal ions such as lithium ions and sodium ions, or alkaline earth metal ions may be used.

For example, when the cation is lithium, lithium-containing transition metal oxide composites such as $LiCoO_2$, $LiNiO_2$, $LiMnO_2$, and $LiMn_2O_4$, lithium-containing transition metal oxide composites including a mixture of a plurality of transition metals in the lithium-containing transition metal oxide composites such as Co, Mn, and Ni, lithium-containing transition metal oxide composites in which a part of the transition metals in the lithium-containing transition metal oxide composites is substituted with a metal other than the transition metals, phosphate compounds of transition metals such as $LiFePO_4$, $LiCoPO_4$, and $LiMnPO_4$ referred to as olivine, oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material (positive electrode active material).

Specific examples thereof include $Li[Ni_{1/3}Mn_{1/3}Co_{1/3}]O_2$, $Li[Ni_{0.45}Mn_{0.35}Co_{0.2}]O_2$, $Li[Ni_{0.5}Mn_{0.3}Co_{0.2}]O_2$, $Li[Ni_{0.6}Mn_{0.2}Co_{0.2}]O_2$ (hereinafter, sometimes referred to as "NCM622"), $Li[Ni_{0.8}Mn_{0.1}Co_{0.1}]O_2$ (hereinafter, sometimes referred to as "NCM811"), $Li[Ni_{0.49}Mn_{0.3}Co_{0.2}Zr_{0.01}]O_2$, $Li[Ni_{0.49}Mn_{0.3}Co_{0.2}Mg_{0.01}]O_2$, $LiNi_{0.8}Co_{0.2}O_2$, $LiNi_{0.85}Co_{0.10}Al_{0.05}O_2$, $LiNi_{0.87}Co_{0.10}Al_{0.03}O_2$, $LiNi_{0.90}Co_{0.07}Al_{0.03}O_2$, $LiNi_{0.6}Co_{0.3}Al_{0.1}O_2$, and $LiMn_{1.5}Ni_{0.5}O_4$.

For example, when the cation is sodium, sodium-containing transition metal oxide composites such as $NaCrO_2$, $NaFe_{0.5}Co_{0.5}O_2$, $NaFe_{0.4}Mn_{0.3}Ni_{0.3}O_2$, $NaNi_{0.5}Ti_{0.3}Mn_{0.2}O_2$, $NaNi_{1/3}Ti_{1/3}Mn_{1/3}O_2$, $NaNi_{0.33}Ti_{0.33}Mn_{0.16}Mg_{0.17}O_2$, $Na_{2/3}Ni_{1/3}Ti_{1/6}Mn_{1/2}O_2$, and $Na_{2/3}Ni_{1/3}Mn_{2/3}O_2$, sodium-containing transition metal oxide composites including a mixture of a plurality of transition metals in the sodium-containing transition metal oxide composites such as Co, Mn, and Ni, sodium-containing transition metal oxide composites in which a part of the transition metals in the sodium-containing transition metal oxide composites is substituted with a metal other than the transition metals, polyanion type compounds such as $NaFePO_4$, $NaVPO_4F$, $Na_3V_2(PO_4)_3$, and $Na_2Fe_2(SO_4)_3$, sodium salts of Prussian Blue analogues represented by a compositional formula $Na_aM_b[Fe(CN)_6]_c$ (M represents Cr, Mn, Fe, Co, Ni, Cu, or Zn, $0 \leq a \leq 2$, $0.5 \leq b \leq 1.5$, and $0.5 \leq c \leq 1.5$), oxides such as $TiO_2$, $V_2O_5$, and $MoO_3$, sulfides such as $TiS_2$ and FeS, conductive polymers such as polyacetylene, polyparaphenylene, polyaniline, and polypyrrole, activated carbon, radical-generating polymers, carbon materials, and the like may be used as a positive electrode material (positive electrode active material).

Acetylene black, Ketjen black, carbon fibers, or graphite as a conductive material, and polytetrafluoroethylene, polyvinylidene fluoride, SBR resin, or the like as a binder may be added to the positive electrode material and the negative electrode material, and an electrode sheet molded into a sheet shape may also be used.

As a separator for preventing contact between the positive electrode and the negative electrode, a nonwoven fabric or a porous sheet made of polypropylene, polyethylene, paper, glass fibers, or the like may be used.

An electrochemical device having a shape such as a coin shape, a cylindrical shape, a rectangular shape, or an aluminum-laminated film type is assembled with the above elements.

In the present specification, in preparing the nonaqueous electrolyte solution, the value of (IV)/{(I)+(IV)}, which is the mass ratio of the amount of (IV) to the total amount of (I) and (IV), can be calculated to five decimal places by selecting an appropriate batch size for the charged amounts of the components and using a balance having appropriate precision.

## EXAMPLES

Hereinafter, the present disclosure will be specifically explained with Examples, but the present disclosure is not limited by these Examples.

[Production of Nonaqueous Electrolyte Solution]

<Example 1-1>

(Preparation of Nonaqueous Electrolyte Solution 1-1)

A mixed solvent of EC:DMC:EMC = 3:3:4 (volume ratio) was used as a nonaqueous organic solvent, and lithium hexafluorophosphate (hereinafter also referred to as "$LiPF_6$") at a concentration of 1.0 mol/L as the solute, lithium difluorophosphate (hereinafter also referred to as "DFP") at a concentration of 1.0% by mass with respect to the total amount of the nonaqueous electrolyte solution as the component (I), and $FSO_2NH_2$ at a concentration of 0.1% by mass

with respect to the total amount of the nonaqueous electrolyte solution as the component (IV) were dissolved in the solvent to obtain a nonaqueous electrolyte solution 1-1. The above preparation was performed while maintaining the liquid temperature at 25°C.

<Examples 1-2 to 1-18>

(Preparation of Nonaqueous Electrolyte Solutions 1-2 to 1-18)

Nonaqueous electrolyte solutions 1-2 to 1-18 were prepared by dissolving by the same procedure as in the preparation of the nonaqueous electrolyte solution 1-1 except that the type and the concentration of the component (I) and the concentration of the component (IV) were changed as shown in Table 1. Here, "FS" means lithium fluorosulfonate, "BOB" means lithium bis(oxalato)borate, "DFOB" means lithium difluorooxalatoborate, "DFBOP" means lithium difluorobis(oxalato)phosphate, "TFOP" means lithium tetrafluorooxalatophosphate, "TOP" means lithium tris(oxalato)phosphate, "DFPFSI" means lithium (difluorophosphoryl)(fluorosulfonyl)imide, and "DFPI" means lithium bis(difluorophosphoryl)imide.

<Comparative Example 1-0-1>

(Preparation of Comparative Nonaqueous Electrolyte Solution 1-0-1)

A comparative nonaqueous electrolyte solution 1-0-1 was prepared by dissolving by the same procedure as in the preparation of the nonaqueous electrolyte solution 1-1 except that the component (I) and the component (IV) were not added.

<Comparative Example 1-0-2>

(Preparation of Comparative Nonaqueous Electrolyte Solution 1-0-2)

A comparative nonaqueous electrolyte solution 1-0-2 was prepared by dissolving by the same procedure as in the preparation of the nonaqueous electrolyte solution 1-1 except that the component (I) was not added.

<Comparative Examples 1-1 to 1-20>

(Preparation of Comparative Nonaqueous Electrolyte Solutions 1-1 to 1-20)

Comparative nonaqueous electrolyte solutions 1-1 to 1-18 were prepared by dissolving by the same procedure as in the preparation of the nonaqueous electrolyte solution 1-1 except that the type and the concentration of the component (I) were changed as shown in Table 1 and that the component (IV) was not added.

Moreover, comparative nonaqueous electrolyte solutions 1-19 and 1-20 were prepared by dissolving by the same procedure as in the preparation of the nonaqueous electrolyte solution 1-1 except that the types and the concentrations of the component (I) and the component (IV) were changed as shown in Table 1.

<Examples 2-1 to 2-18>

(Preparation of Nonaqueous Electrolyte Solutions 2-1 to 2-18)

Nonaqueous electrolyte solutions 2-1 to 2-18 were prepared by dissolving by the same procedure as in the preparation of the nonaqueous electrolyte solution 1-1 except that the types and the concentrations of the component (I) and the component (IV) were changed as shown in Table 2.

<Comparative Example 1-0-3>

(Preparation of Comparative Nonaqueous Electrolyte Solution 1-0-3)

A comparative nonaqueous electrolyte solution 1-0-3 was prepared by dissolving by the same procedure as in the preparation of the comparative nonaqueous electrolyte solution 1-0-2 except that $F_2PONH_2$ was used as the component (IV).

<Comparative Examples 2-1 to 2-8>

(Preparation of Comparative Nonaqueous Electrolyte Solutions 2-1 to 2-8)

Comparative nonaqueous electrolyte solutions 2-1 to 2-8 were prepared by dissolving by the same procedure as in the preparation of the nonaqueous electrolyte solution 1-1 except that the type and the concentration of the component (I) were changed as shown in Table 2 and that the component (IV) was not added.

<Examples 3-1 to 3-18 and Comparative Examples 3-0-1 to 3-20> to <Examples 4-1 to 4-18 and Comparative Examples 4-1 to 4-8>

The nonaqueous electrolyte solutions and the comparative nonaqueous electrolyte solutions shown in the tables were prepared by dissolving in the same manner as in the preparation of the electrolyte solutions shown in Table 1 and Table 2 except for mixing and dissolving at a volume ratio of EC:FEC:DMC:EMC = 3:0.2:3:3.8 using EC, DMC, and EMC as the nonaqueous organic solvents and using FEC as the other component and next dissolving $LiPF_6$ and lithium bis(fluorosulfonyl)imide (hereinafter also referred to as "LiFSI") as the solutes at concentrations of 1.0 mol/L and 0.1 mol/L, respectively and except that the types and the concentrations of the component (I) and the component (IV) were changed as shown in Table 3 and Table 4.

<Examples 5-1 to 5-17 and Comparative Examples 5-0-1 to 5-19> to <Examples 6-1 to 6-17 and Comparative Examples 6-1 to 6-8>

The nonaqueous electrolyte solutions and the comparative nonaqueous electrolyte solutions shown in the tables were prepared by dissolving in the same manner as in the preparation of the electrolyte solutions shown in Table 1 and Table 2 except for mixing and dissolving at a volume ratio of EC:PC:FEC:EMC = 2:1:0.2:6.8 using EC, PC, and EMC as the nonaqueous organic solvents and using FEC as the other component and next dissolving sodium hexafluorophosphate (hereinafter also referred to as "$NaPF_6$") as the solute at a concentration of 1.0 mol/L and except that the types and the concentrations of the component (I) and the component (IV) were changed as shown in Table 5 and Table 6.

[Production of Nonaqueous Electrolyte Solution Battery]

(Production of NCM622 Positive Electrode)

In 90.0% by mass of $LiNi_{0.6}Co_{0.2}Mn_{0.2}O_2$ powder, 5.0% by mass of polyvinylidene fluoride (hereinafter also referred to as "PVDF") as a binder and 5.0% by mass of acetylene black as a conductive material were mixed, and N-methyl-2-pyrrolidone (hereinafter also referred to as "NMP") was further added to produce a positive electrode mixture paste. The paste was applied onto both sides of an aluminum foil (A1085), dried, pressed and then punched into 4 cm $\times$ 5 cm to obtain an NCM622 positive electrode for testing.

(Production of NCM811 Positive Electrode)

In 92.0% by mass of $LiNi_{0.8}Mn_{0.1}Co_{0.1}O_2$ powder, 3.5% by mass of PVDF as a binder and 4.5% by mass of acetylene black as a conductive material were mixed, and NMP was further added to produce a positive electrode mixture paste. The paste was applied onto both sides of an aluminum foil (A1085), dried, pressed and then punched into 4 cm $\times$ 5 cm to obtain an NCM811 positive electrode for testing.

(Production of Sodium Ion Battery Positive Electrode: $NaNi_{0.5}Ti_{0.3}Mn_{0.2}O_2$ Positive Electrode)

By mixing 90.0% by mass of $NaNi_{0.3}Ti_{0.3}Mn_{0.2}O_2$ as a positive electrode active material, 5.0% by mass of acetylene black as a conductive agent, and 5.0% by mass of PVDF as a binder and further adding NMP as a solvent, a positive electrode mixture paste was produced. The paste was applied onto both sides of an aluminum foil (A1085), dried, pressed and then punched into 4 cm $\times$ 5 cm to obtain an $NaNi_{0.3}Ti_{0.3}Mn_{0.2}O_2$ positive electrode for testing.

(Production of Natural Graphite Negative Electrode)

By mixing 92.0% by mass of natural graphite powder, 3.0% by mass of a conductive material (HS-100 manufactured by Denka Company Limited), 2.0% by mass of carbon nanofiber (VGCF manufactured by Showa Denko K.K.), 2.0% by mass of styrene-butadiene rubber (hereinafter also referred to as "SBR"), 1.0% by mass of sodium

carboxymethyl cellulose (hereinafter also referred to as "CMC"), and water, a negative electrode mixture paste was produced. The paste was applied onto a copper foil, dried, pressed and then punched into 4.5 cm × 5.5 cm to obtain a natural graphite negative electrode for testing.

(Production of Silicon-Containing Graphite Negative Electrode)

In 85.0% by mass of artificial graphite powder, 7.0% by mass of nanosilicon, 3.0% by mass of a conductive material (HS-100 manufactured by Denka Company Limited), 2.0% by mass of carbon nanofiber (VGCF manufactured by Showa Denko K.K.), 2.0% by mass of SBR, 1.0% by mass of CMC, and water were mixed to produce a negative electrode mixture paste. The paste was applied onto a copper foil, dried, pressed and then punched into 4.5 cm × 5.5 cm to obtain a silicon-containing graphite negative electrode for testing.

(Production of Hard Carbon Negative Electrode)

By mixing 90.0% by mass of a hard carbon powder (Carbotron P manufactured by Kureha Corporation) and 10.0% by mass of PVDF as a binder and further adding NMP as a solvent, a negative electrode mixture paste was produced. The paste was applied onto an aluminum foil (A1085), dried, pressed and then punched into 4.5 cm × 5.5 cm to obtain a hard carbon negative electrode for testing.

(Production of Nonaqueous Electrolyte Solution Battery)

Under an argon atmosphere at a dew point of -50°C or lower, a terminal was welded to the above NCM622 positive electrode, and both sides of the welded product were then sandwiched between two polyethylene separators (5 cm × 6 cm). The outside of the sandwiched product was sandwiched between two natural graphite negative electrodes to which a terminal had been welded in advance in such a manner that the surface of the negative electrode active material faced the surface of the positive electrode active material. The resultant product was put in an aluminum laminated bag having an opening on one side, and after the nonaqueous electrolyte solution was vacuum-injected into the bag, the opening was sealed with heat. In this manner, the aluminum laminated nonaqueous electrolyte solution batteries according to the Examples and the Comparative Examples in Tables 1 and 2 were produced.

In the Examples and the Comparative Examples in Tables 3 and 4, nonaqueous electrolyte solution batteries were similarly produced using NCM811 for the positive electrode and silicon-containing graphite for the negative electrode.

In the Examples and the Comparative Examples in Tables 5 and 6, nonaqueous electrolyte solution batteries (sodium ion batteries) were similarly produced using the $NaNi_{0.5}Ti_{0.3}Mn_{0.2}O_2$ positive electrode as the positive electrode and the hard carbon negative electrode as the negative electrode.

[Evaluation]

<Initial Charge and Discharge Test: Lithium Ion Battery>

First, the produced cell was conditioned at an ambient temperature of 25°C under the following conditions. That is, as an initial charge and discharge test, a charge and discharge cycle including constant-current constant-voltage charging at an upper limit charge voltage of 4.2 V and at 5 mA, constant-current discharging at 10 mA to a discharge end voltage of 2.5 V, subsequent constant-current constant-voltage charging at an upper limit charge voltage of 4.2 V and at 10 mA, and constant-current discharging at 10 mA to a discharge end voltage of 2.5 V was repeated three times. The discharge capacity in the third cycle was defined as the initial discharge capacity.

<Initial Charge and Discharge Test: Sodium Ion Battery>

First, the produced cell was conditioned at an ambient temperature of 25°C under the following conditions. That is, as an initial charge and discharge test, a charge and discharge cycle including constant-current constant-voltage charging at an upper limit charge voltage of 4.1 V and at 5 mA, constant-current discharging at 10 mA to a discharge end voltage of 1.5 V, subsequent constant-current constant-voltage charging at an upper limit charge voltage of 4.1 V and at 10 mA, and constant-current discharging at 10 mA to a discharge end voltage of 1.5 V was repeated three times. The discharge capacity in the third cycle was defined as the initial discharge capacity.

<Cycle Test (25°C): Lithium Ion Battery>

The nonaqueous electrolyte solution battery after the completion of the initial charge and discharge test was subjected to constant-current constant-voltage charging at an upper limit charge voltage of 4.2 V and at 100 mA and constant-current discharging at 100 mA to a discharge end voltage of 2.5 V. The charging and discharging at 100 mA in an environment at 25°C were repeated 1000 cycles. Thereafter, the battery was subjected to constant-current constant-voltage charging at an upper limit charge voltage of 4.2 V and at 10 mA and constant-current discharging at 10 mA to a discharge end voltage of 2.5 V. The discharge capacity thereof was defined as the discharge capacity after the cycle test.

<Cycle Test (25°C): Sodium Ion Battery>

Except that the upper limit charge voltage was changed to 4.1 V and that the discharge end voltage was changed to 1.5 V, evaluation was performed in the same manner as that for the lithium ion battery.

<Capacity Retention Rate after Cycle Test: Lithium Ion Battery>

The capacity retention rate after the cycle test was determined by the following equation. A larger value thereof means better cycle characteristic.

Capacity retention rate (%) after cycle test = (discharge capacity after cycle test/initial discharge capacity) $\times$ 100

<Capacity Retention Rate after Cycle Test: Sodium Ion Battery>

Evaluation was performed in the same manner as that for the lithium ion battery. A larger value thereof means better cycle characteristic.

<Measurement of Low-Temperature (-20°C) Direct Current Internal Resistance after Cycle Test: Lithium Ion Battery>

The nonaqueous electrolyte solution battery subjected to the cycle test above was charged at a constant current of 10 mA for 150 minutes at an ambient temperature of 25°C, allowed to stand still at an ambient temperature of -20°C for five hours and then charged at a predetermined constant current value (0.5 mA, 1.0 mA, 2.5 mA, 5.0 mA, and 10.0 mA) for 10 seconds. The voltages at the tenth second were measured and plotted with respect to the current value. An approximate straight line was determined by applying the least squares method to the plots. The value of the slope of the approximate straight line was defined as the low-temperature direct current internal resistance after the cycle test. A smaller value thereof means excellent low-temperature input characteristic after the cycle test.

<Measurement of Low-Temperature (-20°C) Direct Current Internal Resistance after Cycle Test: Sodium Ion Battery>

Evaluation was performed in the same manner as that for the lithium ion battery. A smaller value thereof means excellent low-temperature input characteristic after the cycle test.

The evaluation results are shown in Tables 1 to 6 below. With respect to the cycle capacity retention rates and the low-temperature direct current internal resistances after the cycle test of the Examples in Tables 1 to 6, the relative values based on the values of the respective Comparative Examples using the nonaqueous electrolyte solutions under the same conditions except for not containing the component (IV) which are set to 100 are also shown.

[Table 1]

| Table 1 | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 1-1 | Nonaqueous electrolyte solution 1-1 | DFP | 1.00 | $FSO_2NH_2$ | 0.10 | 0.09091 | 70.3 | 105 | 1.38 | 96 | 1-1 |
| Example 1-2 | Nonaqueous electrolyte solution 1-2 | FS | 1.00 | | 0.10 | 0.09091 | 71.9 | 104 | 1.43 | 96 | 1-2 |
| Example 1-3 | Nonaqueous electrolyte solution 1-3 | BOB | 1.00 | | 0.10 | 0.09091 | 68.8 | 106 | 1.66 | 93 | 1-3 |
| Example 1-4 | Nonaqueous electrolyte solution 1-4 | DFOB | 1.00 | | 0.10 | 0.09091 | 61.0 | 103 | 1.67 | 98 | 1-4 |
| Example 1-5 | Nonaqueous electrolyte solution 1-5 | DFBOP | 1.00 | | 0.10 | 0.09091 | 74.5 | 107 | 1.49 | 92 | 1-5 |
| Example 1-6 | Nonaqueous electrolyte solution 1-6 | TFOP | 1.00 | | 0.10 | 0.09091 | 71.1 | 106 | 1.66 | 94 | 1-6 |
| Example 1-7 | Nonaqueous electrolyte solution 1-7 | TOP | 1.00 | | 0.10 | 0.09091 | 71.8 | 108 | 1.70 | 92 | 1-7 |
| Example 1-8-1 | Nonaqueous electrolyte solution 1-8-1 | DFPFSI | 1.00 | | 0.005 | 0.00498 | 69.9 | 101 | 1.45 | 98 | 1-8-1 |
| Example 1-8-2 | Nonaqueous electrolyte solution 1-8-2 | | 1.00 | | 0.05 | 0.04762 | 70.8 | 102 | 1.41 | 96 | 1-8-1 |
| Example 1-8-3 | Nonaqueous electrolyte solution 1-8-3 | | 1.00 | | 0.10 | 0.09091 | 72.2 | 104 | 1.35 | 91 | 1-8-1 |
| Example 1-8-4 | Nonaqueous electrolyte solution 1-8-4 | | 1.00 | | 0.50 | 0.33333 | 71.7 | 103 | 1.38 | 93 | 1-8-1 |
| Example 1-8-5 | Nonaqueous electrolyte solution 1-8-5 | | 1.00 | | 1.00 | 0.50000 | 71.2 | 103 | 1.40 | 95 | 1-8-1 |
| Example 1-8-6 | Nonaqueous electrolyte solution 1-8-6 | | 1.00 | | 2.00 | 0.66667 | 70.6 | 102 | 1.41 | 96 | 1-8-1 |
| Example 1-8-7 | Nonaqueous electrolyte solution 1-8-7 | | 4.50 | | 0.003 | 0.00067 | 70.9 | 103 | 1.33 | 99 | 1-8-2 |
| Example 1-8-8 | Nonaqueous electrolyte solution 1-8-8 | | 2.00 | | 0.003 | 0.00150 | 70.2 | 102 | 1.40 | 98 | 1-8-3 |
| Example 1-8-9 | Nonaqueous electrolyte solution 1-8-9 | | 1.00 | | 0.003 | 0.00299 | 70.0 | 101 | 1.44 | 97 | 1-8-1 |
| Example 1-8-10 | Nonaqueous electrolyte solution 1-8-10 | | 0.50 | | 0.003 | 0.00596 | 64.4 | 101 | 1.53 | 97 | 1-8-4 |
| Example 1-8-11 | Nonaqueous electrolyte solution 1-8-11 | | 0.01 | | 0.003 | 0.23077 | 58.4 | 101 | 1.65 | 96 | 1-8-5 |
| Example 1-8-12 | Nonaqueous electrolyte solution 1-8-12 | | 0.01 | | 0.05 | 0.83333 | 58.6 | 102 | 1.62 | 95 | 1-8-5 |
| Example 1-8-13 | Nonaqueous electrolyte solution 1-8-13 | | 0.01 | | 0.10 | 0.90909 | 59.1 | 103 | 1.63 | 96 | 1-8-5 |
| Example 1-8-14 | Nonaqueous electrolyte solution 1-8-14 | | 0.01 | | 0.30 | 0.96774 | 59.2 | 103 | 1.67 | 97 | 1-8-5 |
| Example 1-8-15 | Nonaqueous electrolyte solution 1-8-15 | | 0.01 | | 0.45 | 0.97826 | 59.6 | 103 | 1.68 | 99 | 1-8-5 |
| Example 1-8-16 | Nonaqueous electrolyte solution 1-8-16 | | 0.01 | | 2.00 | 0.99502 | 58.5 | 101 | 1.69 | 99 | 1-8-5 |
| Example 1-9 | Nonaqueous electrolyte solution 1-9 | DFPI | 1.00 | | 0.10 | 0.09091 | 72.8 | 104 | 1.33 | 91 | 1-9 |

[Table 2]

| Table 1 (continued) | Nonaqueous Electrolyte Solution | Component (I) | | Component (IV) | | (IV)/((I)+(IV)) | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 1-10 | Nonaqueous electrolyte solution 1-10 | DFP | 0.50 | $FSO_2NH_2$ | 0.10 | 0.09091 | 72.0 | 108 | 1.30 | 91 | 1-10 |
| | | DFPFSI | 0.50 | | | | | | | | |
| Example 1-11 | Nonaqueous electrolyte solution 1-11 | FS | 0.50 | | 0.10 | 0.09091 | 76.3 | 105 | 1.38 | 94 | 1-11 |
| | | DFPFSI | 0.50 | | | | | | | | |
| Example 1-12 | Nonaqueous electrolyte solution 1-12 | BOB | 0.50 | | 0.10 | 0.09091 | 79.2 | 112 | 1.42 | 89 | 1-12 |
| | | DFPFSI | 0.50 | | | | | | | | |
| Example 1-13 | Nonaqueous electrolyte solution 1-13 | DFBOP | 0.50 | | 0.10 | 0.09091 | 80.3 | 111 | 1.41 | 92 | 1-13 |
| | | DFPFSI | 0.50 | | | | | | | | |
| Example 1-14 | Nonaqueous electrolyte solution 1-14 | TFOP | 0.50 | | 0.10 | 0.09091 | 78.6 | 109 | 1.47 | 94 | 1-14 |
| | | DFPFSI | 0.50 | | | | | | | | |
| Example 1-15 | Nonaqueous electrolyte solution 1-15 | DFBOP | 0.50 | | 0.10 | 0.09091 | 81.0 | 110 | 1.55 | 95 | 1-15 |
| | | TFOP | 0.50 | | | | | | | | |
| Example 1-16 | Nonaqueous electrolyte solution 1-16 | DFP | 0.25 | | 0.10 | 0.09091 | 85.2 | 116 | 1.35 | 91 | 1-16 |
| | | FS | 0.25 | | | | | | | | |
| | | DFBOP | 0.25 | | | | | | | | |
| | | DFPFSI | 0.25 | | | | | | | | |
| Example 1-17 | Nonaqueous electrolyte solution 1-17 | DFP | 0.25 | | 0.10 | 0.09091 | 88.3 | 119 | 1.33 | 88 | 1-17 |
| | | BOB | 0.25 | | | | | | | | |
| | | DFBOP | 0.25 | | | | | | | | |
| | | DFPFSI | 0.25 | | | | | | | | |
| Example 1-18 | Nonaqueous electrolyte solution 1-18 | DFP | 0.25 | | 0.10 | 0.09091 | 86.6 | 115 | 1.37 | 90 | 1-18 |
| | | DFBOP | 0.25 | | | | | | | | |
| | | TFOP | 0.25 | | | | | | | | |
| | | DFPFSI | 0.25 | | | | | | | | |

[Table 3]

| Table 1 (continued) | Nonaqueous Electrolyte Solution | Component (I) | | Component (IV) | | (IV)/((I)+(IV)) | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 1-0-1 | Comparative nonaqueous electrolyte solution 1-0-1 | None | | None | | - | 56.0 | | 1.80 | | |
| Comparative Example 1-0-2 | Comparative nonaqueous electrolyte solution 1-0-2 | None | | $FSO_3NH_4$ | 0.10 | - | 53.3 | | 1.93 | | |
| Comparative Example 1-1 | Comparative nonaqueous electrolyte solution 1-1 | DFP | 1.00 | None | | 0 | 67.0 | | 1.44 | | |
| Comparative Example 1-2 | Comparative nonaqueous electrolyte solution 1-2 | FS | 1.00 | | | 0 | 68.8 | | 1.49 | | |
| Comparative Example 1-3 | Comparative nonaqueous electrolyte solution 1-3 | BOB | 1.00 | | | 0 | 65.1 | | 1.78 | | |
| Comparative Example 1-4 | Comparative nonaqueous electrolyte solution 1-4 | DFOB | 1.00 | | | 0 | 59.1 | | 1.71 | | |
| Comparative Example 1-5 | Comparative nonaqueous electrolyte solution 1-5 | DFBOP | 1.00 | | | 0 | 69.9 | | 1.62 | | |
| Comparative Example 1-6 | Comparative nonaqueous electrolyte solution 1-6 | TFOP | 1.00 | | | 0 | 66.8 | | 1.76 | | |
| Comparative Example 1-7 | Comparative nonaqueous electrolyte solution 1-7 | TOP | 1.00 | | | 0 | 66.7 | | 1.84 | | |
| Comparative Example 1-8-1 | Comparative nonaqueous electrolyte solution 1-8-1 | DFPFSI | 1.00 | | | 0 | 69.4 | | 1.48 | | |
| Comparative Example 1-8-2 | Comparative nonaqueous electrolyte solution 1-8-2 | | 4.50 | | | 0 | 68.9 | | 1.35 | | |
| Comparative Example 1-8-3 | Comparative nonaqueous electrolyte solution 1-8-3 | | 2.00 | | | 0 | 68.6 | | 1.42 | | |
| Comparative Example 1-8-4 | Comparative nonaqueous electrolyte solution 1-8-4 | | 0.50 | | | 0 | 63.8 | | 1.58 | | |
| Comparative Example 1-8-5 | Comparative nonaqueous electrolyte solution 1-8-5 | | 0.01 | | | 0 | 57.7 | | 1.71 | | |
| Comparative Example 1-9 | Comparative nonaqueous electrolyte solution 1-9 | DFPI | 1.00 | | | 0 | 69.9 | | 1.46 | | |
| Comparative Example 1-10 | Comparative nonaqueous electrolyte solution 1-10 | DFP | 0.50 | | | 0 | 66.8 | | 1.43 | | |
| | | DFPFSI | 0.50 | | | | | | | | |
| Comparative Example 1-11 | Comparative nonaqueous electrolyte solution 1-11 | FS | 0.50 | | | 0 | 72.5 | | 1.47 | | |
| | | DFPFSI | 0.50 | | | | | | | | |
| Comparative Example 1-12 | Comparative nonaqueous electrolyte solution 1-12 | BOB | 0.50 | | | 0 | 70.6 | | 1.60 | | |
| | | DFPFSI | 0.50 | | | | | | | | |

[Table 4]

| Table 1 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 1-13 | Comparative nonaqueous electrolyte solution 1-13 | DFBOP | 0.50 | None | | 0 | 72.4 | | 1.53 | | |
| | | DFPFSI | 0.50 | | | | | | | | |
| Comparative Example 1-14 | Comparative nonaqueous electrolyte solution 1-14 | TFOP | 0.50 | | | 0 | 72.2 | | 1.57 | | |
| | | DFPFSI | 0.50 | | | | | | | | |
| Comparative Example 1-15 | Comparative nonaqueous electrolyte solution 1-15 | DFBOP | 0.50 | | | 0 | 73.9 | | 1.64 | | |
| | | TFOP | 0.50 | | | | | | | | |
| Comparative Example 1-16 | Comparative nonaqueous electrolyte solution 1-16 | DFP | 0.25 | | | 0 | 73.6 | | 1.48 | | |
| | | FS | 0.25 | | | | | | | | |
| | | DFBOP | 0.25 | | | | | | | | |
| | | DFPFSI | 0.25 | | | | | | | | |
| Comparative Example 1-17 | Comparative nonaqueous electrolyte solution 1-17 | DFP | 0.25 | | | 0 | 74.0 | | 1.52 | | |
| | | BO3 | 0.25 | | | | | | | | |
| | | DFBOP | 0.25 | | | | | | | | |
| | | DFPFSI | 0.25 | | | | | | | | |
| Comparative Example 1-18 | Comparative nonaqueous electrolyte solution 1-18 | DFP | 0.25 | | | 0 | 75.1 | | 1.53 | | |
| | | DFBOP | 0.25 | | | | | | | | |
| | | TFOP | 0.25 | | | | | | | | |
| | | DFPFSI | 0.25 | | | | | | | | |
| Comparative Example 1-19 | Comparative nonaqueous electrolyte solution 1-19 | DFPFSI | 1.00 | $SO_2CH_3NH_2$ | 0.10 | 0 | 67.4 | | 1.52 | | |
| Comparative Example 1-20 | Comparative nonaqueous electrolyte solution 1-20 | 1a(Li) | 1.00 | $FSO_2NH_2$ | 0.10 | 0 | 60.3 | | 1.71 | | |

[Table 5]

| Table 2 | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 2-1 | Nonaqueous electrolyte solution 2-1 | DFP | 1.00 | $F_2PONH_2$ | 0.10 | 0.09091 | 69.7 | 104 | 1.40 | 97 | 1-1 |
| Example 2-2 | Nonaqueous electrolyte solution 2-2 | FS | 1.00 | | 0.10 | 0.09091 | 71.3 | 104 | 1.45 | 97 | 1-2 |
| Example 2-3 | Nonaqueous electrolyte solution 2-3 | BOB | 1.00 | | 0.10 | 0.09091 | 68.0 | 104 | 1.69 | 95 | 1-3 |
| Example 2-4 | Nonaqueous electrolyte solution 2-4 | DFOB | 1.00 | | 0.10 | 0.09091 | 60.6 | 102 | 1.68 | 98 | 1-4 |
| Example 2-5 | Nonaqueous electrolyte solution 2-5 | DFBOP | 1.00 | | 0.10 | 0.09091 | 73.6 | 105 | 1.53 | 94 | 1-5 |
| Example 2-6 | Nonaqueous electrolyte solution 2-6 | TFOP | 1.00 | | 0.10 | 0.09091 | 70.1 | 105 | 1.69 | 96 | 1-6 |
| Example 2-7 | Nonaqueous electrolyte solution 2-7 | TOP | 1.00 | | 0.10 | 0.09091 | 70.7 | 106 | 1.74 | 95 | 1-7 |
| Example 2-8 | Nonaqueous electrolyte solution 2-8 | DFPFSI | 1.00 | | 0.10 | 0.09091 | 74.0 | 106 | 1.38 | 94 | 1-8 |
| Example 2-9-1 | Nonaqueous electrolyte solution 2-9-1 | DFPI | 1.00 | | 0.005 | 0.00498 | 70.4 | 101 | 1.43 | 98 | 1-9-1 |
| Example 2-9-2 | Nonaqueous electrolyte solution 2-9-2 | | 1.00 | | 0.05 | 0.04762 | 71.1 | 102 | 1.41 | 97 | 1-9-1 |
| Example 2-9-3 | Nonaqueous electrolyte solution 2-9-3 | | 1.00 | | 0.10 | 0.09091 | 72.2 | 103 | 1.37 | 94 | 1-9-1 |
| Example 2-9-4 | Nonaqueous electrolyte solution 2-9-4 | | 1.00 | | 0.50 | 0.33333 | 71.8 | 103 | 1.39 | 95 | 1-9-1 |
| Example 2-9-5 | Nonaqueous electrolyte solution 2-9-5 | | 1.00 | | 1.00 | 0.50000 | 71.4 | 102 | 1.40 | 96 | 1-9-1 |
| Example 2-9-6 | Nonaqueous electrolyte solution 2-9-6 | | 1.00 | | 2.00 | 0.66667 | 71.0 | 102 | 1.41 | 97 | 1-9-1 |
| Example 2-9-7 | Nonaqueous electrolyte solution 2-9-7 | | 4.50 | | 0.003 | 0.00067 | 71.3 | 102 | 1.32 | 99 | 1-9-2 |
| Example 2-9-8 | Nonaqueous electrolyte solution 2-9-8 | | 2.00 | | 0.003 | 0.00150 | 71.1 | 102 | 1.37 | 99 | 1-9-3 |
| Example 2-9-9 | Nonaqueous electrolyte solution 2-9-9 | | 1.00 | | 0.003 | 0.00299 | 70.4 | 101 | 1.43 | 98 | 1-9-1 |
| Example 2-9-10 | Nonaqueous electrolyte solution 2-9-10 | | 0.50 | | 0.003 | 0.00596 | 64.9 | 101 | 1.51 | 98 | 1-9-4 |
| Example 2-9-11 | Nonaqueous electrolyte solution 2-9-11 | | 0.01 | | 0.003 | 0.23077 | 58.9 | 101 | 1.65 | 97 | 1-9-5 |
| Example 2-9-12 | Nonaqueous electrolyte solution 2-9-12 | | 0.01 | | 0.05 | 0.83333 | 59.0 | 101 | 1.63 | 96 | 1-9-5 |
| Example 2-9-13 | Nonaqueous electrolyte solution 2-9-13 | | 0.01 | | 0.10 | 0.90909 | 59.4 | 102 | 1.64 | 97 | 1-9-5 |
| Example 2-9-14 | Nonaqueous electrolyte solution 2-9-14 | | 0.01 | | 0.30 | 0.96774 | 59.6 | 102 | 1.66 | 98 | 1-9-5 |
| Example 2-9-15 | Nonaqueous electrolyte solution 2-9-15 | | 0.01 | | 0.45 | 0.97826 | 60.0 | 103 | 1.67 | 99 | 1-9-5 |
| Example 2-9-16 | Nonaqueous electrolyte solution 2-9-16 | | 0.01 | | 2.00 | 0.99502 | 59.1 | 101 | 1.68 | 99 | 1-9-5 |

[Table 6]

| Table 2 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 2-10 | Nonaqueous electrolyte solution 2-10 | DFP | 0.50 | $F_2PONH_2$ | 0.10 | 0.09091 | 71.6 | 107 | 1.31 | 92 | 2-1 |
| | | DFPI | 0.50 | | | | | | | | |
| Example 2-11 | Nonaqueous electrolyte solution 2-11 | FS | 0.50 | | 0.10 | 0.09091 | 75.8 | 104 | 1.39 | 95 | 2-2 |
| | | DFPI | 0.50 | | | | | | | | |
| Example 2-12 | Nonaqueous electrolyte solution 2-12 | BOB | 0.50 | | 0.10 | 0.09091 | 78.0 | 110 | 1.44 | 90 | 2-3 |
| | | DFPI | 0.50 | | | | | | | | |
| Example 2-13 | Nonaqueous electrolyte solution 2-13 | DFOB | 0.50 | | 0.10 | 0.09091 | 73.0 | 111 | 1.44 | 92 | 2-4 |
| | | DFPI | 0.50 | | | | | | | | |
| Example 2-14 | Nonaqueous electrolyte solution 2-14 | DFPI | 0.50 | | 0.10 | 0.09091 | 80.6 | 108 | 1.43 | 95 | 2-5 |
| | | DFBOP | 0.50 | | | | | | | | |
| Example 2-15 | Nonaqueous electrolyte solution 2-15 | DFBOP | 0.50 | | 0.10 | 0.09091 | 80.5 | 109 | 1.58 | 96 | 1-15 |
| | | TFOP | 0.50 | | | | | | | | |
| Example 2-16 | Nonaqueous electrolyte solution 2-16 | DFP | 0.25 | | 0.10 | 0.09091 | 87.7 | 117 | 1.36 | 90 | 2-6 |
| | | BOB | 0.25 | | | | | | | | |
| | | DFBOP | 0.25 | | | | | | | | |
| | | DFPI | 0.25 | | | | | | | | |
| Example 2-17 | Nonaqueous electrolyte solution 2-17 | DFP | 0.25 | | 0.10 | 0.09091 | 78.4 | 110 | 1.34 | 90 | 2-7 |
| | | DFOB | 0.25 | | | | | | | | |
| | | DFBOP | 0.25 | | | | | | | | |
| | | DFPI | 0.25 | | | | | | | | |
| Example 2-18 | Nonaqueous electrolyte solution 2-18 | DFP | 0.25 | | 0.10 | 0.09091 | 85.3 | 113 | 1.40 | 92 | 2-8 |
| | | DFBOP | 0.25 | | | | | | | | |
| | | TFOP | 0.25 | | | | | | | | |
| | | DFPI | 0.25 | | | | | | | | |

[Table 7]

| Table 2 (continued) | Nonaqueous Electrolyte Solution | Component (I) | | Component (IV) | | (IV)/[(I)+(IV)] | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 1-0-1 | Comparative nonaqueous electrolyte solution 1-0-1 | None | | None | | - | 56.0 | | 1.80 | | |
| Comparative Example 1-0-3 | Comparative nonaqueous electrolyte solution 1-0-3 | None | | $F_2PONH_2$ | 0.10 | - | 53.9 | | 1.89 | | |
| Comparative Example 1-1 | Comparative nonaqueous electrolyte solution 1-1 | DFP | 1.00 | None | | 0 | 67.0 | | 1.44 | | |
| Comparative Example 1-2 | Comparative nonaqueous electrolyte solution 1-2 | FS | 1.00 | | | 0 | 68.8 | | 1.49 | | |
| Comparative Example 1-3 | Comparative nonaqueous electrolyte solution 1-3 | BOB | 1.00 | | | 0 | 65.1 | | 1.78 | | |
| Comparative Example 1-4 | Comparative nonaqueous electrolyte solution 1-4 | DFOB | 1.00 | | | 0 | 59.1 | | 1.71 | | |
| Comparative Example 1-5 | Comparative nonaqueous electrolyte solution 1-5 | DFBOP | 1.00 | | | 0 | 69.9 | | 1.62 | | |
| Comparative Example 1-6 | Comparative nonaqueous electrolyte solution 1-6 | TFOP | 1.00 | | | 0 | 66.8 | | 1.76 | | |
| Comparative Example 1-7 | Comparative nonaqueous electrolyte solution 1-7 | TOP | 1.00 | | | 0 | 66.7 | | 1.84 | | |
| Comparative Example 1-8 | Comparative nonaqueous electrolyte solution 1-8 | DFPFSI | 1.00 | | | 0 | 69.4 | | 1.48 | | |
| Comparative Example 1-9-1 | Comparative nonaqueous electrolyte solution 1-9-1 | DFPI | 1.00 | | | 0 | 69.9 | | 1.46 | | |
| Comparative Example 1-9-2 | Comparative nonaqueous electrolyte solution 1-9-2 | | 4.50 | | | 0 | 70.2 | | 1.33 | | |
| Comparative Example 1-9-3 | Comparative nonaqueous electrolyte solution 1-9-3 | | 2.00 | | | 0 | 69.9 | | 1.39 | | |
| Comparative Example 1-9-4 | Comparative nonaqueous electrolyte solution 1-9-4 | | 0.50 | | | 0 | 64.3 | | 1.55 | | |
| Comparative Example 1-9-5 | Comparative nonaqueous electrolyte solution 1-9-5 | | 0.01 | | | 0 | 58.2 | | 1.69 | | |
| Comparative Example 2-1 | Comparative nonaqueous electrolyte solution 2-1 | DFP<br>DFPI | 0.50<br>0.50 | | | 0 | 67.1 | | 1.42 | | |
| Comparative Example 2-2 | Comparative nonaqueous electrolyte solution 2-2 | FS<br>DFPI | 0.50<br>0.50 | | | 0 | 72.8 | | 1.46 | | |

[Table 8]

| Table 2 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 2-3 | Comparative nonaqueous electrolyte solution 2-3 | BOB | 0.50 | None | | 0 | 70.9 | | 1.59 | | |
| | | DFPI | 0.50 | | | | | | | | |
| Comparative Example 2-4 | Comparative nonaqueous electrolyte solution 2-4 | DFOB | 0.50 | | | 0 | 65.8 | | 1.57 | | |
| | | DFPI | 0.50 | | | | | | | | |
| Comparative Example 2-5 | Comparative nonaqueous electrolyte solution 2-5 | DFPI | 0.50 | | | 0 | 74.8 | | 1.51 | | |
| | | DFBOP | 0.50 | | | | | | | | |
| Comparative Example 1-15 | Comparative nonaqueous electrolyte solution 1-15 | DFBOP | 0.50 | | | 0 | 73.9 | | 1.64 | | |
| | | TFOP | 0.50 | | | | | | | | |
| Comparative Example 2-6 | Comparative nonaqueous electrolyte solution 2-6 | DFP | 0.25 | | | 0 | 74.8 | | 1.51 | | |
| | | BOB | 0.25 | | | | | | | | |
| | | DFBOP | 0.25 | | | | | | | | |
| | | DFPI | 0.25 | | | | | | | | |
| Comparative Example 2-7 | Comparative nonaqueous electrolyte solution 2-7 | DFP | 0.25 | | | 0 | 71.2 | | 1.49 | | |
| | | DFOB | 0.25 | | | | | | | | |
| | | DFBOP | 0.25 | | | | | | | | |
| | | DFPI | 0.25 | | | | | | | | |
| Comparative Example 2-8 | Comparative nonaqueous electrolyte solution 2-8 | DFP | 0.25 | | | 0 | 75.3 | | 1.52 | | |
| | | DFBOP | 0.25 | | | | | | | | |
| | | TFOP | 0.25 | | | | | | | | |
| | | DFPI | 0.25 | | | | | | | | |

[Table 9]

| Table 3 | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 3-1 | Nonaqueous electrolyte solution 3-1 | DFP | 1.00 | $FSO_2NH_2$ | 0.10 | 0.09091 | 59.5 | 106 | 1.58 | 94 | 3-1 |
| Example 3-2 | Nonaqueous electrolyte solution 3-2 | FS | 1.00 | | 0.10 | 0.09091 | 58.7 | 104 | 1.67 | 95 | 3-2 |
| Example 3-3 | Nonaqueous electrolyte solution 3-3 | BOB | 1.00 | | 0.10 | 0.09091 | 55.5 | 107 | 2.00 | 92 | 3-3 |
| Example 3-4 | Nonaqueous electrolyte solution 3-4 | DFOB | 1.00 | | 0.10 | 0.09091 | 49.8 | 104 | 2.01 | 97 | 3-4 |
| Example 3-5 | Nonaqueous electrolyte solution 3-5 | DFBOP | 1.00 | | 0.10 | 0.09091 | 64.7 | 109 | 1.66 | 89 | 3-5 |
| Example 3-6 | Nonaqueous electrolyte solution 3-6 | TFOP | 1.00 | | 0.10 | 0.09091 | 59.5 | 109 | 1.88 | 92 | 3-6 |
| Example 3-7 | Nonaqueous electrolyte solution 3-7 | TOP | 1.00 | | 0.10 | 0.09091 | 58.6 | 109 | 2.00 | 92 | 3-7 |
| Example 3-8-1 | Nonaqueous electrolyte solution 3-8-1 | DFPFSI | 1.00 | | 0.005 | 0.00498 | 57.8 | 103 | 1.65 | 96 | 3-8-1 |
| Example 3-8-2 | Nonaqueous electrolyte solution 3-8-2 | | 1.00 | | 0.05 | 0.04762 | 58.5 | 105 | 1.61 | 93 | 3-8-1 |
| Example 3-8-3 | Nonaqueous electrolyte solution 3-8-3 | | 1.00 | | 0.10 | 0.09091 | 59.7 | 107 | 1.54 | 89 | 3-8-1 |
| Example 3-8-4 | Nonaqueous electrolyte solution 3-8-4 | | 1.00 | | 0.50 | 0.33333 | 59.2 | 106 | 1.57 | 91 | 3-8-1 |
| Example 3-8-5 | Nonaqueous electrolyte solution 3-8-5 | | 1.00 | | 1.00 | 0.50000 | 58.8 | 105 | 1.60 | 92 | 3-8-1 |
| Example 3-8-6 | Nonaqueous electrolyte solution 3-8-6 | | 1.00 | | 2.00 | 0.66667 | 58.4 | 104 | 1.61 | 93 | 3-8-1 |
| Example 3-8-7 | Nonaqueous electrolyte solution 3-8-7 | | 4.50 | | 0.003 | 0.00067 | 58.6 | 106 | 1.52 | 96 | 3-8-2 |
| Example 3-8-8 | Nonaqueous electrolyte solution 3-8-8 | | 2.00 | | 0.003 | 0.00150 | 58.0 | 105 | 1.59 | 96 | 3-8-3 |
| Example 3-8-9 | Nonaqueous electrolyte solution 3-8-9 | | 1.00 | | 0.003 | 0.00299 | 57.9 | 104 | 1.64 | 95 | 3-8-1 |
| Example 3-8-10 | Nonaqueous electrolyte solution 3-8-10 | | 0.50 | | 0.003 | 0.00596 | 53.2 | 103 | 1.75 | 94 | 3-8-4 |
| Example 3-8-11 | Nonaqueous electrolyte solution 3-8-11 | | 0.01 | | 0.003 | 0.23077 | 48.3 | 104 | 1.88 | 94 | 3-8-5 |
| Example 3-8-12 | Nonaqueous electrolyte solution 3-8-12 | | 0.01 | | 0.05 | 0.83333 | 48.4 | 104 | 1.85 | 92 | 3-8-5 |
| Example 3-8-13 | Nonaqueous electrolyte solution 3-8-13 | | 0.01 | | 0.10 | 0.90909 | 48.9 | 105 | 1.86 | 93 | 3-8-5 |
| Example 3-8-14 | Nonaqueous electrolyte solution 3-8-14 | | 0.01 | | 0.30 | 0.96774 | 49.0 | 105 | 1.90 | 95 | 3-8-5 |
| Example 3-8-15 | Nonaqueous electrolyte solution 3-8-15 | | 0.01 | | 0.45 | 0.97826 | 49.3 | 106 | 1.92 | 96 | 3-8-5 |
| Example 3-8-16 | Nonaqueous electrolyte solution 3-8-16 | | 0.01 | | 2.00 | 0.99502 | 47.2 | 101 | 1.96 | 98 | 3-8-5 |
| Example 3-9 | Nonaqueous electrolyte solution 3-9 | DFPI | 1.00 | | 0.10 | 0.09091 | 60.9 | 107 | 1.57 | 91 | 3-9 |

[Table 10]

| Table 3 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 3-10 | Nonaqueous electrolyte solution 3-10 | DFP | 0.50 | $FSO_2NH_2$ | 0.10 | 0.09091 | 60.2 | 110 | 1.49 | 89 | 3-10 |
| | | DFPFSI | 0.50 | | | | | | | | |
| Example 3-11 | Nonaqueous electrolyte solution 3-11 | FS | 0.50 | | 0.10 | 0.09091 | 62.6 | 106 | 1.60 | 92 | 3-11 |
| | | DFPFSI | 0.50 | | | | | | | | |
| Example 3-12 | Nonaqueous electrolyte solution 3-12 | BOB | 0.50 | | 0.10 | 0.09091 | 64.6 | 114 | 1.67 | 87 | 3-12 |
| | | DFPFSI | 0.50 | | | | | | | | |
| Example 3-13 | Nonaqueous electrolyte solution 3-13 | DFBOP | 0.50 | | 0.10 | 0.09091 | 68.0 | 114 | 1.58 | 89 | 3-13 |
| | | DFPFSI | 0.50 | | | | | | | | |
| Example 3-14 | Nonaqueous electrolyte solution 3-14 | TFOP | 0.50 | | 0.10 | 0.09091 | 65.4 | 111 | 1.67 | 91 | 3-14 |
| | | DFPFSI | 0.50 | | | | | | | | |
| Example 3-15 | Nonaqueous electrolyte solution 3-15 | DFBOP | 0.50 | | 0.10 | 0.09091 | 69.3 | 112 | 1.77 | 93 | 3-15 |
| | | TFOP | 0.50 | | | | | | | | |
| Example 3-16 | Nonaqueous electrolyte solution 3-16 | DFP | 0.25 | | 0.10 | 0.09091 | 71.5 | 118 | 1.54 | 90 | 3-16 |
| | | FS | 0.25 | | | | | | | | |
| | | DFBOP | 0.25 | | | | | | | | |
| | | DFPFSI | 0.25 | | | | | | | | |
| Example 3-17 | Nonaqueous electrolyte solution 3-17 | DFP | 0.25 | | 0.10 | 0.09091 | 73.9 | 122 | 1.53 | 86 | 3-17 |
| | | BOB | 0.25 | | | | | | | | |
| | | DFBOP | 0.25 | | | | | | | | |
| | | DFPFSI | 0.25 | | | | | | | | |
| Example 3-18 | Nonaqueous electrolyte solution 3-18 | DFP | 0.25 | | 0.10 | 0.09091 | 73.1 | 117 | 1.55 | 87 | 3-18 |
| | | DFBOP | 0.25 | | | | | | | | |
| | | TFOP | 0.25 | | | | | | | | |
| | | DFPFSI | 0.25 | | | | | | | | |

[Table 11]

| Table 3 (continued) | Nonaqueous Electrolyte Solution | Component (I) | | Component (IV) | | (IV)/((I)+(IV)) | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 3-0-1 | Comparative nonaqueous electrolyte solution 3-0-1 | None | | None | | - | 45.7 | | 2.16 | | |
| Comparative Example 3-0-2 | Comparative nonaqueous electrolyte solution 3-0-2 | None | | $FSO_2NH_2$ | 0.10 | - | 42.4 | | 2.29 | | |
| Comparative Example 3-1 | Comparative nonaqueous electrolyte solution 3-1 | DFP | 1.00 | None | | 0 | 56.1 | | 1.68 | | |
| Comparative Example 3-2 | Comparative nonaqueous electrolyte solution 3-2 | FS | 1.00 | | | 0 | 56.2 | | 1.76 | | |
| Comparative Example 3-3 | Comparative nonaqueous electrolyte solution 3-3 | BOB | 1.00 | | | 0 | 51.9 | | 2.17 | | |
| Comparative Example 3-4 | Comparative nonaqueous electrolyte solution 3-4 | DFOB | 1.00 | | | 0 | 47.7 | | 2.07 | | |
| Comparative Example 3-5 | Comparative nonaqueous electrolyte solution 3-5 | DFBOP | 1.00 | | | 0 | 59.2 | | 1.86 | | |
| Comparative Example 3-6 | Comparative nonaqueous electrolyte solution 3-6 | TFOP | 1.00 | | | 0 | 55.3 | | 2.05 | | |
| Comparative Example 3-7 | Comparative nonaqueous electrolyte solution 3-7 | TOP | 1.00 | | | 0 | 53.7 | | 2.18 | | |
| Comparative Example 3-8-1 | Comparative nonaqueous electrolyte solution 3-8-1 | DFPFSI | 1.00 | | | 0 | 55.9 | | 1.73 | | |
| Comparative Example 3-8-2 | Comparative nonaqueous electrolyte solution 3-8-2 | | 4.50 | | | 0 | 55.4 | | 1.58 | | |
| Comparative Example 3-8-3 | Comparative nonaqueous electrolyte solution 3-8-3 | | 2.00 | | | 0 | 55.3 | | 1.66 | | |
| Comparative Example 3-8-4 | Comparative nonaqueous electrolyte solution 3-8-4 | | 0.50 | | | 0 | 51.5 | | 1.85 | | |
| Comparative Example 3-8-5 | Comparative nonaqueous electrolyte solution 3-8-5 | | 0.01 | | | 0 | 46.5 | | 2.00 | | |
| Comparative Example 3-9 | Comparative nonaqueous electrolyte solution 3-9 | DFPI | 1.00 | | | 0 | 57.1 | | 1.72 | | |
| Comparative Example 3-10 | Comparative nonaqueous electrolyte solution 3-10 | DFP | 0.50 | | | 0 | 54.9 | | 1.67 | | |
| | | DFPFSI | 0.50 | | | | | | | | |
| Comparative Example 3-11 | Comparative nonaqueous electrolyte solution 3-11 | FS | 0.50 | | | 0 | 58.8 | | 1.73 | | |
| | | DFPFSI | 0.50 | | | | | | | | |
| Comparative Example 3-12 | Comparative nonaqueous electrolyte solution 3-12 | BOB | 0.50 | | | 0 | 56.6 | | 1.91 | | |
| | | DFPFSI | 0.50 | | | | | | | | |

[Table 12]

| Table 3 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 3-13 | Comparative nonaqueous electrolyte solution 3-13 | DFBOP<br>DFPFSI | 0.50<br>0.50 | None | | 0 | 59.9 | | 1.78 | | |
| Comparative Example 3-14 | Comparative nonaqueous electrolyte solution 3-14 | TFOP<br>DFPFSI | 0.50<br>0.50 | None | | 0 | 58.9 | | 1.83 | | |
| Comparative Example 3-15 | Comparative nonaqueous electrolyte solution 3-15 | DFBOP<br>TFOP | 0.50<br>0.50 | None | | 0 | 61.8 | | 1.90 | | |
| Comparative Example 3-16 | Comparative nonaqueous electrolyte solution 3-16 | DFP<br>FS<br>DFBOP<br>DFPFSI | 0.25<br>0.25<br>0.25<br>0.25 | None | | 0 | 60.8 | | 1.72 | | |
| Comparative Example 3-17 | Comparative nonaqueous electrolyte solution 3-17 | DFP<br>BOB<br>DFBOP<br>DFPFSI | 0.25<br>0.25<br>0.25<br>0.25 | None | | 0 | 60.8 | | 1.79 | | |
| Comparative Example 3-18 | Comparative nonaqueous electrolyte solution 3-18 | DFP<br>DFBOP<br>TFOP<br>DFPFSI | 0.25<br>0.25<br>0.25<br>0.25 | None | | 0 | 62.3 | | 1.78 | | |
| Comparative Example 3-19 | Comparative nonaqueous electrolyte solution 3-19 | DFPFSI | 1.00 | $SO_2CH_3NH_2$ | 0.10 | 0 | 54.4 | | 1.82 | | |
| Comparative Example 3-20 | Comparative nonaqueous electrolyte solution 3-20 | 1a(Li) | 1.00 | $FSO_2NH_2$ | 0.10 | 0 | 48.6 | | 2.04 | | |

[Table 13]

| Table 4 | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 4-1 | Nonaqueous electrolyte solution 4-1 | DFP | 1.00 | $F_2PONH_2$ | 0.10 | 0.09091 | 59.0 | 105 | 1.60 | 95 | 3-1 |
| Example 4-2 | Nonaqueous electrolyte solution 4-2 | FS | 1.00 | | 0.10 | 0.09091 | 58.2 | 104 | 1.70 | 96 | 3-2 |
| Example 4-3 | Nonaqueous electrolyte solution 4-3 | BOB | 1.00 | | 0.10 | 0.09091 | 54.8 | 106 | 2.05 | 94 | 3-3 |
| Example 4-4 | Nonaqueous electrolyte solution 4-4 | DFOB | 1.00 | | 0.10 | 0.09091 | 49.5 | 104 | 2.02 | 98 | 3-4 |
| Example 4-5 | Nonaqueous electrolyte solution 4-5 | DFBOP | 1.00 | | 0.10 | 0.09091 | 63.8 | 108 | 1.70 | 91 | 3-5 |
| Example 4-6 | Nonaqueous electrolyte solution 4-6 | TFOP | 1.00 | | 0.10 | 0.09091 | 58.7 | 106 | 1.91 | 93 | 3-6 |
| Example 4-7 | Nonaqueous electrolyte solution 4-7 | TOP | 1.00 | | 0.10 | 0.09091 | 57.7 | 107 | 2.05 | 94 | 3-7 |
| Example 4-8 | Nonaqueous electrolyte solution 4-8 | DFPFSI | 1.00 | | 0.10 | 0.09091 | 61.1 | 107 | 1.57 | 91 | 3-8 |
| Example 4-9-1 | Nonaqueous electrolyte solution 4-9-1 | DFPI | 1.00 | | 0.005 | 0.00498 | 58.9 | 103 | 1.68 | 98 | 3-9-1 |
| Example 4-9-2 | Nonaqueous electrolyte solution 4-9-2 | | 1.00 | | 0.05 | 0.04762 | 59.5 | 104 | 1.65 | 96 | 3-9-1 |
| Example 4-9-3 | Nonaqueous electrolyte solution 4-9-3 | | 1.00 | | 0.10 | 0.09091 | 60.4 | 106 | 1.60 | 93 | 3-9-1 |
| Example 4-9-4 | Nonaqueous electrolyte solution 4-9-4 | | 1.00 | | 0.50 | 0.33333 | 60.1 | 105 | 1.62 | 94 | 3-9-1 |
| Example 4-9-5 | Nonaqueous electrolyte solution 4-9-5 | | 1.00 | | 1.00 | 0.50000 | 59.7 | 105 | 1.64 | 95 | 3-9-1 |
| Example 4-9-6 | Nonaqueous electrolyte solution 4-9-6 | | 1.00 | | 2.00 | 0.66667 | 59.4 | 104 | 1.65 | 96 | 3-9-1 |
| Example 4-9-7 | Nonaqueous electrolyte solution 4-9-7 | | 4.50 | | 0.003 | 0.00067 | 59.7 | 104 | 1.54 | 98 | 3-9-2 |
| Example 4-9-8 | Nonaqueous electrolyte solution 4-9-8 | | 2.00 | | 0.003 | 0.00150 | 59.5 | 104 | 1.60 | 98 | 3-9-3 |
| Example 4-9-9 | Nonaqueous electrolyte solution 4-9-9 | | 1.00 | | 0.003 | 0.00299 | 58.9 | 103 | 1.67 | 97 | 3-9-1 |
| Example 4-9-10 | Nonaqueous electrolyte solution 4-9-10 | | 0.50 | | 0.003 | 0.00596 | 54.3 | 103 | 1.77 | 97 | 3-9-4 |
| Example 4-9-11 | Nonaqueous electrolyte solution 4-9-11 | | 0.01 | | 0.003 | 0.23077 | 49.3 | 104 | 1.93 | 97 | 3-9-5 |
| Example 4-9-12 | Nonaqueous electrolyte solution 4-9-12 | | 0.01 | | 0.05 | 0.83333 | 49.4 | 104 | 1.91 | 95 | 3-9-5 |
| Example 4-9-13 | Nonaqueous electrolyte solution 4-9-13 | | 0.01 | | 0.10 | 0.90909 | 49.7 | 105 | 1.92 | 96 | 3-9-5 |
| Example 4-9-14 | Nonaqueous electrolyte solution 4-9-14 | | 0.01 | | 0.30 | 0.96774 | 49.9 | 105 | 1.94 | 97 | 3-9-5 |
| Example 4-9-15 | Nonaqueous electrolyte solution 4-9-15 | | 0.01 | | 0.45 | 0.97826 | 50.2 | 105 | 1.96 | 98 | 3-9-5 |
| Example 4-9-16 | Nonaqueous electrolyte solution 4-9-16 | | 0.01 | | 2.00 | 0.99502 | 48.2 | 101 | 1.98 | 99 | 3-9-5 |

[Table 14]

| Table 4 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 4-10 | Nonaqueous electrolyte solution 4-10 | DFP | 0.50 | $F_2PONH_2$ | 0.10 | 0.09091 | 60.2 | 109 | 1.52 | 91 | 4-1 |
| | | DFPI | 0.50 | | | | | | | | |
| Example 4-11 | Nonaqueous electrolyte solution 4-11 | FS | 0.50 | | 0.10 | 0.09091 | 62.7 | 105 | 1.62 | 94 | 4-2 |
| | | DFPI | 0.50 | | | | | | | | |
| Example 4-12 | Nonaqueous electrolyte solution 4-12 | BOB | 0.50 | | 0.10 | 0.09091 | 64.1 | 112 | 1.71 | 90 | 4-3 |
| | | DFPI | 0.50 | | | | | | | | |
| Example 4-13 | Nonaqueous electrolyte solution 4-13 | DFOB | 0.50 | | 0.10 | 0.09091 | 60.4 | 113 | 1.71 | 91 | 4-4 |
| | | DFPI | 0.50 | | | | | | | | |
| Example 4-14 | Nonaqueous electrolyte solution 4-14 | DFPI | 0.50 | | 0.10 | 0.09091 | 68.6 | 110 | 1.63 | 93 | 4-5 |
| | | DFBOP | 0.50 | | | | | | | | |
| Example 4-15 | Nonaqueous electrolyte solution 4-15 | DFBOP | 0.50 | | 0.10 | 0.09091 | 70.1 | 113 | 1.73 | 91 | 3-15 |
| | | TFOP | 0.50 | | | | | | | | |
| Example 4-16 | Nonaqueous electrolyte solution 4-16 | DFP | 0.25 | | 0.10 | 0.09091 | 73.6 | 119 | 1.55 | 87 | 4-6 |
| | | BOB | 0.25 | | | | | | | | |
| | | DFBOP | 0.25 | | | | | | | | |
| | | DFPI | 0.25 | | | | | | | | |
| Example 4-17 | Nonaqueous electrolyte solution 4-17 | DFP | 0.25 | | 0.10 | 0.09091 | 66.0 | 112 | 1.55 | 88 | 4-7 |
| | | DFOB | 0.25 | | | | | | | | |
| | | DFBOP | 0.25 | | | | | | | | |
| | | DFPI | 0.25 | | | | | | | | |
| Example 4-18 | Nonaqueous electrolyte solution 4-18 | DFP | 0.25 | | 0.10 | 0.09091 | 72.3 | 115 | 1.58 | 89 | 4-8 |
| | | DFBOP | 0.25 | | | | | | | | |
| | | TFOP | 0.25 | | | | | | | | |
| | | DFPI | 0.25 | | | | | | | | |

[Table 15]

| Table 4 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 3-0-1 | Comparative nonaqueous electrolyte solution 3-0-1 | None | | None | | - | 45.7 | | 2.16 | | |
| Comparative Example 3-0-3 | Comparative nonaqueous electrolyte solution 3-0-3 | None | | $F_2PONH_2$ | 0.10 | - | 44.5 | | 2.23 | | |
| Comparative Example 3-1 | Comparative nonaqueous electrolyte solution 3-1 | DFP | 1.00 | None | | 0 | 56.1 | | 1.68 | | |
| Comparative Example 3-2 | Comparative nonaqueous electrolyte solution 3-2 | FS | 1.00 | | | 0 | 56.2 | | 1.76 | | |
| Comparative Example 3-3 | Comparative nonaqueous electrolyte solution 3-3 | BOB | 1.00 | | | 0 | 51.9 | | 2.17 | | |
| Comparative Example 3-4 | Comparative nonaqueous electrolyte solution 3-4 | DFOB | 1.00 | | | 0 | 47.7 | | 2.07 | | |
| Comparative Example 3-5 | Comparative nonaqueous electrolyte solution 3-5 | DFBOP | 1.00 | | | 0 | 59.2 | | 1.86 | | |
| Comparative Example 3-6 | Comparative nonaqueous electrolyte solution 3-6 | TFOP | 1.00 | | | 0 | 55.3 | | 2.05 | | |
| Comparative Example 3-7 | Comparative nonaqueous electrolyte solution 3-7 | TOP | 1.00 | | | 0 | 53.7 | | 2.18 | | |
| Comparative Example 3-8 | Comparative nonaqueous electrolyte solution 3-8 | DFPFSI | 1.00 | | | 0 | 55.9 | | 1.73 | | |
| Comparative Example 3-9-1 | Comparative nonaqueous electrolyte solution 3-9-1 | DFPI | 1.00 | | | 0 | 57.1 | | 1.72 | | |
| Comparative Example 3-9-2 | Comparative nonaqueous electrolyte solution 3-9-2 | | 4.50 | | | 0 | 57.3 | | 1.57 | | |
| Comparative Example 3-9-3 | Comparative nonaqueous electrolyte solution 3-9-3 | | 2.00 | | | 0 | 57.1 | | 1.64 | | |
| Comparative Example 3-9-4 | Comparative nonaqueous electrolyte solution 3-9-4 | | 0.50 | | | 0 | 52.5 | | 1.83 | | |
| Comparative Example 3-9-5 | Comparative nonaqueous electrolyte solution 3-9-5 | | 0.01 | | | 0 | 47.5 | | 2.00 | | |
| Comparative Example 4-1 | Comparative nonaqueous electrolyte solution 4-1 | DFP | 0.50 | | | 0 | 55.5 | | 1.67 | | |
| | | DFPI | 0.50 | | | | | | | | |
| Comparative Example 4-2 | Comparative nonaqueous electrolyte solution 4-2 | FS | 0.50 | | | 0 | 59.5 | | 1.72 | | |
| | | DFPI | 0.50 | | | | | | | | |

[Table 16]

| Table 4 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 4-3 | Comparative nonaqueous electrolyte solution 4-3 | BOB | 0.50 | None | | 0 | 57.2 | | 1.91 | | |
| | | DFPI | 0.50 | | | | | | | | |
| Comparative Example 4-4 | Comparative nonaqueous electrolyte solution 4-4 | DFOB | 0.50 | | | 0 | 53.4 | | 1.87 | | |
| | | DFPI | 0.50 | | | | | | | | |
| Comparative Example 4-5 | Comparative nonaqueous electrolyte solution 4-5 | DFPI | 0.50 | | | 0 | 62.2 | | 1.76 | | |
| | | DFBOP | 0.50 | | | | | | | | |
| Comparative Example 3-15 | Comparative nonaqueous electrolyte solution 3-15 | DFBOP | 0.50 | | | 0 | 61.8 | | 1.90 | | |
| | | TFOP | 0.50 | | | | | | | | |
| Comparative Example 4-6 | Comparative nonaqueous electrolyte solution 4-6 | DFP | 0.25 | | | 0 | 61.6 | | 1.78 | | |
| | | BOB | 0.25 | | | | | | | | |
| | | DFBOP | 0.25 | | | | | | | | |
| | | DFPI | 0.25 | | | | | | | | |
| Comparative Example 4-7 | Comparative nonaqueous electrolyte solution 4-7 | DFP | 0.25 | | | 0 | 58.8 | | 1.76 | | |
| | | DFOB | 0.25 | | | | | | | | |
| | | DFBOP | 0.25 | | | | | | | | |
| | | DFPI | 0.25 | | | | | | | | |
| Comparative Example 4-8 | Comparative nonaqueous electrolyte solution 4-8 | DFP | 0.25 | | | 0 | 62.6 | | 1.77 | | |
| | | DFBOP | 0.25 | | | | | | | | |
| | | TFOP | 0.25 | | | | | | | | |
| | | DFPI | 0.25 | | | | | | | | |

[Table 17]

| Table 5 | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 5-1 | Nonaqueous electrolyte solution 5-1 | DFP | 1.00 | $FSO_2NH_2$ | 0.10 | 0.09091 | 80.4 | 108 | 1.05 | 94 | 5-1 |
| Example 5-2 | Nonaqueous electrolyte solution 5-2 | FS | 1.00 | | 0.10 | 0.09091 | 79.8 | 104 | 1.10 | 95 | 5-2 |
| Example 5-3 | Nonaqueous electrolyte solution 5-3 | DFOB | 1.00 | | 0.10 | 0.09091 | 68.5 | 104 | 1.32 | 97 | 5-3 |
| Example 5-4 | Nonaqueous electrolyte solution 5-4 | DFBOP | 1.00 | | 0.10 | 0.09091 | 85.3 | 110 | 1.08 | 89 | 5-4 |
| Example 5-5 | Nonaqueous electrolyte solution 5-5 | TFOP | 1.00 | | 0.10 | 0.09091 | 80.5 | 108 | 1.20 | 92 | 5-5 |
| Example 5-6 | Nonaqueous electrolyte solution 5-6 | TOP | 1.00 | | 0.10 | 0.09091 | 79.8 | 108 | 1.19 | 91 | 5-6 |
| Example 5-7-1 | Nonaqueous electrolyte solution 5-7-1 | DFPFSI | 1.00 | | 0.005 | 0.00498 | 78.5 | 102 | 1.02 | 94 | 5-7-1 |
| Example 5-7-2 | Nonaqueous electrolyte solution 5-7-2 | | 1.00 | | 0.05 | 0.04762 | 79.4 | 103 | 0.99 | 92 | 5-7-1 |
| Example 5-7-3 | Nonaqueous electrolyte solution 5-7-3 | | 1.00 | | 0.10 | 0.09091 | 81.0 | 105 | 0.95 | 88 | 5-7-1 |
| Example 5-7-4 | Nonaqueous electrolyte solution 5-7-4 | | 1.00 | | 0.50 | 0.33333 | 80.4 | 104 | 0.96 | 89 | 5-7-1 |
| Example 5-7-5 | Nonaqueous electrolyte solution 5-7-5 | | 1.00 | | 1.00 | 0.50000 | 79.9 | 104 | 0.98 | 91 | 5-7-1 |
| Example 5-7-6 | Nonaqueous electrolyte solution 5-7-6 | | 1.00 | | 2.00 | 0.66667 | 79.3 | 103 | 0.99 | 92 | 5-7-1 |
| Example 5-7-7 | Nonaqueous electrolyte solution 5-7-7 | | 4.50 | | 0.003 | 0.00067 | 79.6 | 104 | 0.93 | 95 | 5-7-2 |
| Example 5-7-8 | Nonaqueous electrolyte solution 5-7-8 | | 2.00 | | 0.003 | 0.00150 | 78.8 | 103 | 0.98 | 94 | 5-7-3 |
| Example 5-7-9 | Nonaqueous electrolyte solution 5-7-9 | | 1.00 | | 0.003 | 0.00299 | 78.6 | 102 | 1.01 | 93 | 5-7-1 |
| Example 5-7-10 | Nonaqueous electrolyte solution 5-7-10 | | 0.50 | | 0.003 | 0.00596 | 72.3 | 102 | 1.07 | 93 | 5-7-4 |
| Example 5-7-11 | Nonaqueous electrolyte solution 5-7-11 | | 0.01 | | 0.003 | 0.23077 | 66.9 | 101 | 1.15 | 92 | 5-7-5 |
| Example 5-7-12 | Nonaqueous electrolyte solution 5-7-12 | | 0.01 | | 0.05 | 0.83333 | 66.4 | 101 | 1.14 | 91 | 5-7-5 |
| Example 5-7-13 | Nonaqueous electrolyte solution 5-7-13 | | 0.01 | | 0.10 | 0.90909 | 67.0 | 102 | 1.14 | 92 | 5-7-5 |
| Example 5-7-14 | Nonaqueous electrolyte solution 5-7-14 | | 0.01 | | 0.30 | 0.96774 | 67.1 | 102 | 1.17 | 93 | 5-7-5 |
| Example 5-7-15 | Nonaqueous electrolyte solution 5-7-15 | | 0.01 | | 0.45 | 0.97826 | 67.6 | 102 | 1.18 | 94 | 5-7-5 |
| Example 5-7-16 | Nonaqueous electrolyte solution 5-7-16 | | 0.01 | | 2.00 | 0.99502 | 66.9 | 101 | 1.23 | 99 | 5-7-5 |
| Example 5-8 | Nonaqueous electrolyte solution 5-8 | DFPI | 1.00 | | 0.10 | 0.09091 | 82.6 | 106 | 0.96 | 91 | 5-8 |

[Table 18]

| Table 5 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 5-9 | Nonaqueous electrolyte solution 5-9 | DFP | 0.50 | $FSO_2NH_2$ | 0.10 | 0.09091 | 81.6 | 110 | 0.94 | 88 | 5-9 |
| | | DFPFSI | 0.50 | | | | | | | | |
| Example 5-10 | Nonaqueous electrolyte solution 5-10 | FS | 0.50 | | 0.10 | 0.09091 | 85.2 | 106 | 1.01 | 91 | 5-10 |
| | | DFPFSI | 0.50 | | | | | | | | |
| Example 5-11 | Nonaqueous electrolyte solution 5-11 | DFBOP | 0.50 | | 0.10 | 0.09091 | 91.0 | 113 | 1.00 | 88 | 5-11 |
| | | DFPFSI | 0.50 | | | | | | | | |
| Example 5-12 | Nonaqueous electrolyte solution 5-12 | TFOP | 0.50 | | 0.10 | 0.09091 | 88.6 | 110 | 1.03 | 89 | 5-12 |
| | | DFPFSI | 0.50 | | | | | | | | |
| Example 5-13 | Nonaqueous electrolyte solution 5-13 | TOP | 0.50 | | 0.10 | 0.09091 | 89.2 | 112 | 1.01 | 86 | 5-13 |
| | | DFPFSI | 0.50 | | | | | | | | |
| Example 5-14 | Nonaqueous electrolyte solution 5-14 | DFBOP | 0.50 | | 0.10 | 0.09091 | 89.5 | 112 | 1.14 | 90 | 5-14 |
| | | TFOP | 0.50 | | | | | | | | |
| Example 5-15 | Nonaqueous electrolyte solution 5-15 | DFP | 0.25 | | 0.10 | 0.09091 | 96.3 | 118 | 0.99 | 88 | 5-15 |
| | | FS | 0.25 | | | | | | | | |
| | | DFBOP | 0.25 | | | | | | | | |
| | | DFPFSI | 0.25 | | | | | | | | |
| Example 5-16 | Nonaqueous electrolyte solution 5-16 | DFP | 0.25 | | 0.10 | 0.09091 | 98.4 | 118 | 1.00 | 88 | 5-16 |
| | | DFBOP | 0.25 | | | | | | | | |
| | | TFOP | 0.25 | | | | | | | | |
| | | DFPFSI | 0.25 | | | | | | | | |
| Example 5-17 | Nonaqueous electrolyte solution 5-17 | DFP | 0.25 | | 0.10 | 0.09091 | 100.3 | 121 | 0.96 | 85 | 5-17 |
| | | TOP | 0.25 | | | | | | | | |
| | | DFBOP | 0.25 | | | | | | | | |
| | | DFPFSI | 0.25 | | | | | | | | |

[Table 19]

| Table 5 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 5-0-1 | Comparative nonaqueous electrolyte solution 5-0-1 | None | | None | | - | 62.2 | | 1.44 | | |
| Comparative Example 5-0-2 | Comparative nonaqueous electrolyte solution 5-0-2 | None | | $FSO_2NH_2$ | 0.10 | - | 59.2 | | 1.52 | | |
| Comparative Example 5-1 | Comparative nonaqueous electrolyte solution 5-1 | DFP | 1.00 | None | | 0 | 74.5 | | 1.11 | | |
| Comparative Example 5-2 | Comparative nonaqueous electrolyte solution 5-2 | FS | 1.00 | | | 0 | 76.4 | | 1.17 | | |
| Comparative Example 5-3 | Comparative nonaqueous electrolyte solution 5-3 | DFOB | 1.00 | | | 0 | 65.7 | | 1.37 | | |
| Comparative Example 5-4 | Comparative nonaqueous electrolyte solution 5-4 | DFBOP | 1.00 | | | 0 | 77.7 | | 1.22 | | |
| Comparative Example 5-5 | Comparative nonaqueous electrolyte solution 5-5 | TFOP | 1.00 | | | 0 | 74.3 | | 1.31 | | |
| Comparative Example 5-6 | Comparative nonaqueous electrolyte solution 5-6 | TOP | 1.00 | | | 0 | 74.1 | | 1.30 | | |
| Comparative Example 5-7-1 | Comparative nonaqueous electrolyte solution 5-7-1 | DFPFSI | 1.00 | | | 0 | 77.1 | | 1.08 | | |
| Comparative Example 5-7-2 | Comparative nonaqueous electrolyte solution 5-7-2 | | 4.50 | | | 0 | 76.4 | | 0.99 | | |
| Comparative Example 5-7-3 | Comparative nonaqueous electrolyte solution 5-7-3 | | 2.00 | | | 0 | 76.2 | | 1.04 | | |
| Comparative Example 5-7-4 | Comparative nonaqueous electrolyte solution 5-7-4 | | 0.50 | | | 0 | 70.9 | | 1.16 | | |
| Comparative Example 5-7-5 | Comparative nonaqueous electrolyte solution 5-7-5 | | 0.01 | | | 0 | 66.0 | | 1.25 | | |
| Comparative Example 5-8 | Comparative nonaqueous electrolyte solution 5-8 | DFPI | 1.00 | | | 0 | 77.7 | | 1.05 | | |
| Comparative Example 5-9 | Comparative nonaqueous electrolyte solution 5-9 | DFP | 0.50 | | | 0 | 74.3 | | 1.07 | | |
| | | DFPFSI | 0.50 | | | | | | | | |
| Comparative Example 5-10 | Comparative nonaqueous electrolyte solution 5-10 | FS | 0.50 | | | 0 | 80.6 | | 1.11 | | |
| | | DFPFSI | 0.50 | | | | | | | | |
| Comparative Example 5-11 | Comparative nonaqueous electrolyte solution 5-11 | DFBOP | 0.50 | | | 0 | 80.5 | | 1.13 | | |
| | | DFPFSI | 0.50 | | | | | | | | |

[Table 20]

| Table 5 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 5-12 | Comparative nonaqueous electrolyte solution 5-12 | TFOP | 0.50 | None | | 0 | 80.2 | | 1.15 | | |
| | | DFPFSI | 0.50 | | | | | | | | |
| Comparative Example 5-13 | Comparative nonaqueous electrolyte solution 5-13 | TOP | 0.50 | | | 0 | 79.4 | | 1.17 | | |
| | | DFPFSI | 0.50 | | | | | | | | |
| Comparative Example 5-14 | Comparative nonaqueous electrolyte solution 5-14 | DF3OP | 0.50 | | | 0 | 80.1 | | 1.26 | | |
| | | TFOP | 0.50 | | | | | | | | |
| Comparative Example 5-15 | Comparative nonaqueous electrolyte solution 5-15 | DFP | 0.25 | | | 0 | 81.8 | | 1.12 | | |
| | | FS | 0.25 | | | | | | | | |
| | | DF3OP | 0.25 | | | | | | | | |
| | | DFPFSI | 0.25 | | | | | | | | |
| Comparative Example 5-16 | Comparative nonaqueous electrolyte solution 5-16 | DFP | 0.25 | | | 0 | 83.5 | | 1.14 | | |
| | | DF3OP | 0.25 | | | | | | | | |
| | | TFOP | 0.25 | | | | | | | | |
| | | DFPFSI | 0.25 | | | | | | | | |
| Comparative Example 5-17 | Comparative nonaqueous electrolyte solution 5-17 | DFP | 0.25 | | | 0 | 82.7 | | 1.13 | | |
| | | TOP | 0.25 | | | | | | | | |
| | | DF3OP | 0.25 | | | | | | | | |
| | | DFPFSI | 0.25 | | | | | | | | |
| Comparative Example 5-18 | Comparative nonaqueous electrolyte solution 5-18 | DFPFSI | 1.00 | $SO_2CH_3NH_2$ | 0.10 | 0 | 73.7 | | 1.11 | | |
| Comparative Example 5-19 | Comparative nonaqueous electrolyte solution 5-19 | 1a(Na) | 1.00 | $FSO_2NH_2$ | 0.10 | 0 | 67.6 | | 1.34 | | |

[Table 21]

| Table 6 | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 6-1 | Nonaqueous electrolyte solution 6-1 | DFP | 1.00 | $F_2PONH_2$ | 0.10 | 0.09091 | 80.5 | 108 | 1.02 | 92 | 5-1 |
| Example 6-2 | Nonaqueous electrolyte solution 6-2 | FS | 1.00 | | 0.10 | 0.09091 | 80.0 | 105 | 1.10 | 95 | 5-2 |
| Example 6-3 | Nonaqueous electrolyte solution 6-3 | DFOB | 1.00 | | 0.10 | 0.09091 | 68.0 | 104 | 1.31 | 96 | 5-3 |
| Example 6-4 | Nonaqueous electrolyte solution 6-4 | DFBOP | 1.00 | | 0.10 | 0.09091 | 83.4 | 107 | 1.09 | 89 | 5-4 |
| Example 6-5 | Nonaqueous electrolyte solution 6-5 | TFOP | 1.00 | | 0.10 | 0.09091 | 81.8 | 110 | 1.17 | 89 | 5-5 |
| Example 6-6 | Nonaqueous electrolyte solution 6-6 | TOP | 1.00 | | 0.10 | 0.09091 | 80.1 | 108 | 1.20 | 92 | 5-6 |
| Example 6-7 | Nonaqueous electrolyte solution 6-7 | DFPFSI | 1.00 | | 0.10 | 0.09091 | 83.0 | 107 | 0.96 | 92 | 5-7 |
| Example 6-8-1 | Nonaqueous electrolyte solution 6-8-1 | DFPI | 1.00 | | 0.005 | 0.00498 | 80.5 | 104 | 0.99 | 92 | 5-8-1 |
| Example 6-8-2 | Nonaqueous electrolyte solution 6-8-2 | | 1.00 | | 0.05 | 0.04762 | 81.3 | 105 | 0.97 | 90 | 5-8-1 |
| Example 6-8-3 | Nonaqueous electrolyte solution 6-8-3 | | 1.00 | | 0.10 | 0.09091 | 82.6 | 106 | 0.94 | 88 | 5-8-1 |
| Example 6-8-4 | Nonaqueous electrolyte solution 6-8-4 | | 1.00 | | 0.50 | 0.33333 | 82.2 | 106 | 0.96 | 89 | 5-8-1 |
| Example 6-8-5 | Nonaqueous electrolyte solution 6-8-5 | | 1.00 | | 1.00 | 0.50000 | 81.7 | 105 | 0.97 | 90 | 5-8-1 |
| Example 6-8-6 | Nonaqueous electrolyte solution 6-8-6 | | 1.00 | | 2.00 | 0.66667 | 81.2 | 105 | 0.97 | 90 | 5-8-1 |
| Example 6-8-7 | Nonaqueous electrolyte solution 6-8-7 | | 4.50 | | 0.003 | 0.00067 | 81.6 | 105 | 0.91 | 95 | 5-8-2 |
| Example 6-8-8 | Nonaqueous electrolyte solution 6-8-8 | | 2.00 | | 0.003 | 0.00150 | 81.4 | 105 | 0.94 | 95 | 5-8-3 |
| Example 6-8-9 | Nonaqueous electrolyte solution 6-8-9 | | 1.00 | | 0.003 | 0.00299 | 80.6 | 104 | 0.99 | 94 | 5-8-1 |
| Example 6-8-10 | Nonaqueous electrolyte solution 6-8-10 | | 0.50 | | 0.003 | 0.00596 | 74.2 | 104 | 1.04 | 94 | 5-8-4 |
| Example 6-8-11 | Nonaqueous electrolyte solution 6-8-11 | | 0.01 | | 0.003 | 0.23077 | 67.4 | 104 | 1.14 | 93 | 5-8-5 |
| Example 6-8-12 | Nonaqueous electrolyte solution 6-8-12 | | 0.01 | | 0.05 | 0.83333 | 67.5 | 104 | 1.12 | 92 | 5-8-5 |
| Example 6-8-13 | Nonaqueous electrolyte solution 6-8-13 | | 0.01 | | 0.10 | 0.90909 | 68.0 | 105 | 1.13 | 93 | 5-8-5 |
| Example 6-8-14 | Nonaqueous electrolyte solution 6-8-14 | | 0.01 | | 0.30 | 0.96774 | 68.3 | 105 | 1.15 | 94 | 5-8-5 |
| Example 6-8-15 | Nonaqueous electrolyte solution 6-8-15 | | 0.01 | | 0.45 | 0.97826 | 68.7 | 106 | 1.16 | 95 | 5-8-5 |
| Example 6-8-16 | Nonaqueous electrolyte solution 6-8-16 | | 0.01 | | 2.00 | 0.99502 | 66.3 | 102 | 1.21 | 99 | 5-8-5 |

[Table 22]

| Table 6 (continued) | Nonaqueous Electrolyte Solution | Component (I) | | Component (IV) | | (IV)/[(I)+(IV)] | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Example 6-9 | Nonaqueous electrolyte solution 6-9 | DFP | 0.50 | $F_2PONH_2$ | 0.10 | 0.09091 | 76.4 | 111 | 0.93 | 88 | 6-1 |
| | | DFPI | 0.50 | | | | | | | | |
| Example 6-10 | Nonaqueous electrolyte solution 6-10 | FS | 0.50 | $F_2PONH_2$ | 0.10 | 0.09091 | 79.7 | 107 | 1.00 | 92 | 6-2 |
| | | DFPI | 0.50 | | | | | | | | |
| Example 6-11 | Nonaqueous electrolyte solution 6-11 | DFBOP | 0.50 | $F_2PONH_2$ | 0.10 | 0.09091 | 76.8 | 114 | 1.06 | 89 | 6-3 |
| | | DFPI | 0.50 | | | | | | | | |
| Example 6-12 | Nonaqueous electrolyte solution 6-12 | TFOP | 0.50 | $F_2PONH_2$ | 0.10 | 0.09091 | 85.1 | 112 | 1.00 | 90 | 6-4 |
| | | DFPI | 0.50 | | | | | | | | |
| Example 6-13 | Nonaqueous electrolyte solution 6-13 | TOP | 0.50 | $F_2PONH_2$ | 0.10 | 0.09091 | 83.2 | 114 | 1.01 | 87 | 6-5 |
| | | DFPI | 0.50 | | | | | | | | |
| Example 6-14 | Nonaqueous electrolyte solution 6-14 | DFBOP | 0.50 | $F_2PONH_2$ | 0.10 | 0.09091 | 88.1 | 110 | 1.12 | 89 | 5-14 |
| | | TFOP | 0.50 | | | | | | | | |
| Example 6-15 | Nonaqueous electrolyte solution 6-15 | DFP | 0.25 | $F_2PONH_2$ | 0.10 | 0.09091 | 82.8 | 114 | 0.98 | 86 | 6-6 |
| | | FS | 0.25 | | | | | | | | |
| | | DFBOP | 0.25 | | | | | | | | |
| | | DFPI | 0.25 | | | | | | | | |
| Example 6-16 | Nonaqueous electrolyte solution 6-16 | DFP | 0.25 | $F_2PONH_2$ | 0.10 | 0.09091 | 86.7 | 119 | 0.96 | 85 | 6-7 |
| | | DFBOP | 0.25 | | | | | | | | |
| | | TFOP | 0.25 | | | | | | | | |
| | | DFPI | 0.25 | | | | | | | | |
| Example 6-17 | Nonaqueous electrolyte solution 6-17 | DFP | 0.25 | $F_2PONH_2$ | 0.10 | 0.09091 | 93.3 | 122 | 0.97 | 86 | 6-8 |
| | | TOP | 0.25 | | | | | | | | |
| | | DFBOP | 0.25 | | | | | | | | |
| | | DFPI | 0.25 | | | | | | | | |

[Table 23]

| Table 6 (continued) | Nonaqueous Electrolyte Solution | Component (I) | | Component (IV) | | {(IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 5-0-1 | Comparative nonaqueous electrolyte solution 5-0-1 | None | | None | | - | 62.2 | | 1.52 | | |
| Comparative Example 5-0-3 | Comparative nonaqueous electrolyte solution 5-0-3 | None | | $F_2PONH_2$ | 0.10 | - | 59.9 | | 1.47 | | |
| Comparative Example 5-1 | Comparative nonaqueous electrolyte solution 5-1 | DFP | 1.00 | None | | 0 | 74.5 | | 1.11 | | |
| Comparative Example 5-2 | Comparative nonaqueous electrolyte solution 5-2 | FS | 1.00 | | | 0 | 76.4 | | 1.17 | | |
| Comparative Example 5-3 | Comparative nonaqueous electrolyte solution 5-3 | DFOB | 1.00 | | | 0 | 65.7 | | 1.37 | | |
| Comparative Example 5-4 | Comparative nonaqueous electrolyte solution 5-4 | DFBOP | 1.00 | | | 0 | 77.7 | | 1.22 | | |
| Comparative Example 5-5 | Comparative nonaqueous electrolyte solution 5-5 | TFOP | 1.00 | | | 0 | 74.3 | | 1.31 | | |
| Comparative Example 5-6 | Comparative nonaqueous electrolyte solution 5-6 | TOP | 1.00 | | | 0 | 74.1 | | 1.30 | | |
| Comparative Example 5-7 | Comparative nonaqueous electrolyte solution 5-7 | DFPFSI | 1.00 | | | 0 | 77.1 | | 1.08 | | |
| Comparative Example 5-8-1 | Comparative nonaqueous electrolyte solution 5-8-1 | DFPI | 1.00 | | | 0 | 77.7 | | 1.05 | | |
| Comparative Example 5-8-2 | Comparative nonaqueous electrolyte solution 5-8-2 | | 4.50 | | | 0 | 78.0 | | 0.96 | | |
| Comparative Example 5-8-3 | Comparative nonaqueous electrolyte solution 5-8-3 | | 2.00 | | | 0 | 77.7 | | 1.00 | | |
| Comparative Example 5-8-4 | Comparative nonaqueous electrolyte solution 5-8-4 | | 0.50 | | | 0 | 71.5 | | 1.11 | | |
| Comparative Example 5-8-5 | Comparative nonaqueous electrolyte solution 5-8-5 | | 0.01 | | | 0 | 64.7 | | 1.22 | | |
| Comparative Example 6-1 | Comparative nonaqueous electrolyte solution 6-1 | DFP<br>DFPI | 0.50<br>0.50 | | | 0 | 68.5 | | 1.06 | | |
| Comparative Example 6-2 | Comparative nonaqueous electrolyte solution 6-2 | FS<br>DFPI | 0.50<br>0.50 | | | 0 | 74.3 | | 1.10 | | |
| Comparative Example 6-3 | Comparative nonaqueous electrolyte solution 6-3 | DFBOP<br>DFPI | 0.50<br>0.50 | | | 0 | 67.2 | | 1.19 | | |

[Table 24]

| Table 6 (continued) | Nonaqueous Electrolyte Solution | Component (I) | | Component (IV) | | (IV)/{(I)+(IV)} | Cycle Capacity Retention Rate (%) | Cycle Capacity Retention Rate (Relative Value) | Low-Temperature Direct Current Internal Resistance (Ω) after Cycle Test | Low-Temperature Direct Current Internal Resistance (Relative Value) after Cycle Test | Comparative Nonaqueous Electrolyte Solution as Reference |
|---|---|---|---|---|---|---|---|---|---|---|---|
| | | Type | Content [% by mass] | Type | Content [% by mass] | | | | | | |
| Comparative Example 6-4 | Comparative nonaqueous electrolyte solution 6-4 | TFOP | 0.50 | None | | 0 | 76.3 | | 1.11 | | |
| | | DFPI | 0.50 | | | | | | | | |
| Comparative Example 6-5 | Comparative nonaqueous electrolyte solution 6-5 | TOP | 0.50 | | | 0 | 73.2 | | 1.15 | | |
| | | DFPI | 0.50 | | | | | | | | |
| Comparative Example 5-14 | Comparative nonaqueous electrolyte solution 5-14 | DFBOP | 0.50 | | | 0 | 80.1 | | 1.26 | | |
| | | TFOP | 0.50 | | | | | | | | |
| Comparative Example 6-6 | Comparative nonaqueous electrolyte solution 6-6 | DFP | 0.25 | | | 0 | 72.6 | | 1.14 | | |
| | | FS | 0.25 | | | | | | | | |
| | | DFBOP | 0.25 | | | | | | | | |
| | | DFPI | 0.25 | | | | | | | | |
| Comparative Example 6-7 | Comparative nonaqueous electrolyte solution 6-7 | DFP | 0.25 | | | 0 | 76.8 | | 1.13 | | |
| | | DFBOP | 0.25 | | | | | | | | |
| | | TFOP | 0.25 | | | | | | | | |
| | | DFPI | 0.25 | | | | | | | | |
| Comparative Example 6-8 | Comparative nonaqueous electrolyte solution 6-8 | DFP | 0.25 | | | 0 | 76.8 | | 1.12 | | |
| | | TOP | 0.25 | | | | | | | | |
| | | DFBOP | 0.25 | | | | | | | | |
| | | DFPI | 0.25 | | | | | | | | |

In the comparative nonaqueous electrolyte solution 1-19 in Table 1, the comparative nonaqueous electrolyte solution 3-19 in Table 3, and the comparative nonaqueous electrolyte solution 5-18 in Table 5, $SO_2CH_3NH_2$ (methanesulfonamide) is not included in the component (IV) but is shown in the column of the component (IV) for convenience.

In the comparative nonaqueous electrolyte solution 1-20 in Table 1 and the comparative nonaqueous electrolyte solution 3-20 in Table 3, the compound 1a (Li) represents the following compound. Here, the compound 1a (Li) is not included in the component (I) but is shown in the column of the component (I) for convenience.

[Chem. 9]

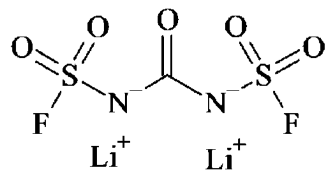

The compound 1a (Li) was synthesized by the method described in paragraph [0090] of WO2021/015264.

In the comparative nonaqueous electrolyte solution 5-19 of Table 5, the compound 1a (Na) represents the following compound. Here, the compound 1a (Na) is not included in the component (I) but is shown in the column of the component (I) for convenience.

[Chem. 10]

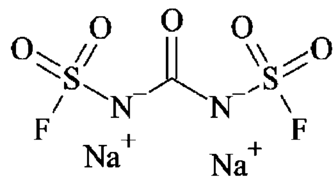

The compound 1a (Na) was synthesized according to the method described in [0090] of WO2021/015264.

From Tables 1 to 6, it can be seen that, when the results are compared under the same condition except for the presence or absence of the component (IV), the nonaqueous electrolyte solution batteries including the nonaqueous electrolyte solutions of the Examples containing the components (I) and (IV) could exhibit superior normal-temperature cycle characteristic and low-temperature input characteristic after the cycle test to those of the nonaqueous electrolyte solution batteries including the nonaqueous electrolyte solutions of the Comparative Examples which contained the component (I) but which did not contain the component (IV). The normal-temperature cycle characteristics and the low-temperature input characteristics after the cycle test of the Comparative Examples which contained the component (IV) but which did not contain the component (I) and the Comparative Examples which contained neither the component (I) nor the component (IV) were both inferior to those of the nonaqueous electrolyte solution batteries including the nonaqueous electrolyte solutions of the Examples. In addition, the normal-temperature cycle characteristics and the low-temperature input characteristics after the cycle test of the Comparative Examples using the compounds 1a (Li) and 1a (Na), which are comparative compounds that do not correspond to the component (I), were both inferior to those of the corresponding Examples using the compounds corresponding to the component (I). In addition, the normal-temperature cycle characteristics and the low-temperature input characteristics after the cycle test of the Comparative Examples using $SO_2CH_3NH_2$, which is a comparative compound that does not correspond to the component (IV), were both inferior to those of the corresponding Examples using the compounds corresponding to the component (IV).

INDUSTRIAL APPLICABILITY

According to the present disclosure, a nonaqueous electrolyte solution capable of exhibiting an excellent normal-temperature cycle characteristic and a low-temperature input characteristic after a cycle test when used for a nonaqueous electrolyte solution battery and a nonaqueous electrolyte solution battery can be provided.

Although the present disclosure has been explained in detail and referring to specific embodiments, it will be apparent to a person skilled in the art that various changes and modifications can be made without departing from the spirit and the scope of the present disclosure.

The present application is based on a Japanese Patent Application (No. 2023-174648) filed on October 6, 2023, the contents of which are incorporated herein by reference.

## Claims

1. A nonaqueous electrolyte solution, comprising:

   (I) at least one compound selected from the group consisting of a monofluorophosphate salt, a difluorophosphate salt, a monofluorosulfonate salt, a salt represented by the following general formula (1), and a salt represented by the following general formula (2);
   (II) a solute;
   (III) a nonaqueous organic solvent; and
   (IV) a compound represented by the following general formula (3):

[Chem. 1]

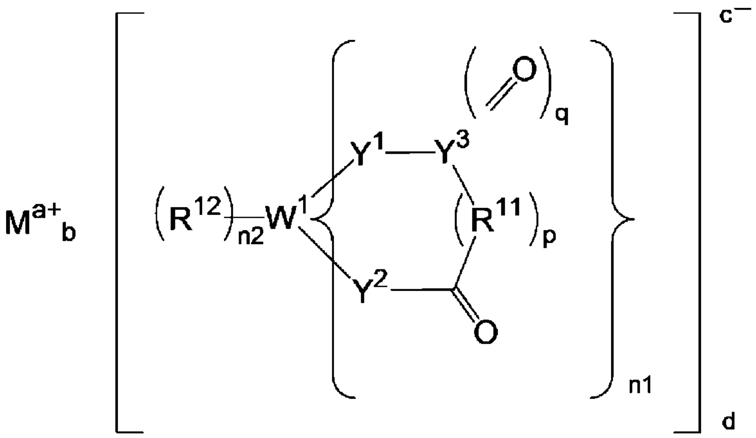

(1)

wherein in the general formula (1), $W^1$ represents a boron atom, a phosphorus atom, or a silicon atom,
n1 is 1 to 3,
n2 is 0 to 4,
p is 0 or 1,
$R^{11}$ represents an alkylene group having 1 to 10 carbon atoms, a halogenated alkylene group having 1 to 10 carbon atoms, an arylene group having 6 to 20 carbon atoms, or a halogenated arylene group having 6 to 20 carbon atoms (wherein the groups may contain a substituent or may contain a heteroatom in the structures thereof, and when n1 is 2 or more, the n1 $R^{11}$'s may be bonded to each other),
$R^{12}$ represents a halogen atom,
$Y^1$ and $Y^2$ each independently represent an oxygen atom or a sulfur atom,
$Y^3$ represents a carbon atom or a sulfur atom,
q oxo groups (=O) are bonded to the carbon atom or the sulfur atom represented by $Y^3$,
q is 1 when $Y^3$ is a carbon atom, and q is 1 or 2 when $Y^3$ is a sulfur atom,
$M^{a+}$ represents an alkali metal cation, an alkaline earth metal cation, or an onium cation,
a represents a valence of a corresponding cation, and a to d are each 1 or 2 and satisfy $a \times b = c \times d$:

[Chem. 2]

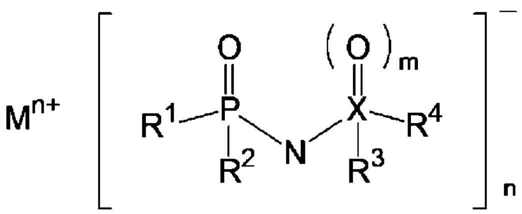

(2)

wherein in the general formula (2), $M^{n+}$ is an alkali metal cation, an alkaline earth metal cation, or an onium cation,
n is an integer equal to a valence of a corresponding cation,
X is a sulfur atom or a phosphorus atom, when X is a sulfur atom, m is 2, and $R^4$ does not exist, when X is a

phosphorus atom, m is 1,

$R^1$, $R^2$, $R^3$, and $R^4$ are each independently a fluorine atom or an organic group selected from the group consisting of an alkyl group having 1 to 10 carbon atoms, an alkoxy group having 1 to 10 carbon atoms, an alkenyl group having 2 to 10 carbon atoms, an alkenyloxy group having 2 to 10 carbon atoms, an alkynyl group having 2 to 10 carbon atoms, an alkynyloxy group having 2 to 10 carbon atoms, a cycloalkyl group having 3 to 10 carbon atoms, a cycloalkoxy group having 3 to 10 carbon atoms, a cycloalkenyl group having 3 to 10 carbon atoms, a cycloalkenyloxy group having 3 to 10 carbon atoms, an aryl group having 6 to 10 carbon atoms, and an aryloxy group having 6 to 10 carbon atoms, and a fluorine atom, an oxygen atom, and/or an unsaturated bond may be present in the organic group:

[Chem. 3]

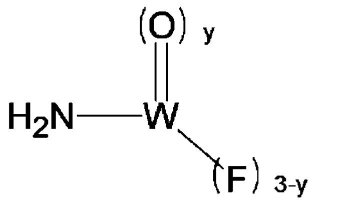

(3)

wherein in the general formula (3), W is a phosphorus atom or a sulfur atom, when W is a phosphorus atom, y is 1, and when W is a sulfur atom, y is 2.

**2.** The nonaqueous electrolyte solution according to claim 1, wherein (IV)/{(I)+(IV)}, which is a mass ratio of a content of the (IV) to a total amount of the (I) and the (IV), is 0.00019 to 0.99.

**3.** The nonaqueous electrolyte solution according to claim 1, wherein the salt represented by the general formula (1) is at least one selected from the group consisting of a bis(oxalato)borate salt, a difluoro(oxalato)borate salt, a tris(oxalato)phosphate salt, a difluorobis(oxalato)phosphate salt, and a tetrafluoro(oxalato)phosphate salt.

**4.** The nonaqueous electrolyte solution according to claim 1, wherein the salt represented by the general formula (2) has at least one P-F bond or S-F bond.

**5.** The nonaqueous electrolyte solution according to claim 1, wherein a cation of the salt of the (I) is a lithium ion, a sodium ion, a potassium ion, or a tetraalkylammonium ion.

**6.** The nonaqueous electrolyte solution according to claim 1, wherein the (II) is at least one selected from the group consisting of $LiPF_6$, $LiBF_4$, $LiSbF_6$, $LiAsF_6$, $LiClO_4$, $LiCF_3SO_3$, $LiC_4F_9SO_3$, $LiN(SO_2F)_2$, $LiAlO_2$, $LiAlCl_4$, LiCl, and LiI, or at least one selected from the group consisting of $NaPF_6$, $NaBF_4$, $NaSbF_6$, $NaAsF_6$, $NaClO_4$, $NaCF_3SO_3$, $NaC_4F_9SO_3$, $NaN(SO_2F)_2$, $NaAlO_2$, $NaAlCl_4$, NaCl, and NaI.

**7.** The nonaqueous electrolyte solution according to claim 1, wherein the (III) contains at least one selected from the group consisting of a cyclic ester, an acyclic ester, a cyclic ether, an acyclic ether, a sulfone compound, a sulfoxide compound, and an ionic liquid.

**8.** The nonaqueous electrolyte solution according to claim 7, wherein the cyclic ester contains a cyclic carbonate.

**9.** The nonaqueous electrolyte solution according to claim 8, wherein the cyclic carbonate contains at least one selected from the group consisting of ethylene carbonate and propylene carbonate.

**10.** The nonaqueous electrolyte solution according to claim 7, wherein the acyclic ester contains an acyclic carbonate.

**11.** The nonaqueous electrolyte solution according to claim 10, wherein the acyclic carbonate contains at least one selected from the group consisting of ethyl methyl carbonate, dimethyl carbonate, diethyl carbonate, and methyl propyl carbonate.

**12.** The nonaqueous electrolyte solution according to claim 1, further comprising at least one selected from the group consisting of vinylene carbonate, fluoroethylene carbonate, a nitrate salt, 1,3-propenesultone, 1,3-propanesultone, 1,6-diisocyanatohexane, dimethyl dicarbonate, ethynylethylene carbonate, trans-difluoroethylene carbonate, 1,3,2-dioxathiolane-2,2-dioxide, 4-propyl-1,3,2-dioxathiolane-2,2-dioxide, methylene methanedisulfonate, 1,2-ethanedisulfonic anhydride, methanesulfonic anhydride, methanesulfonyl fluoride, 1,4-dioxane-2,6-dione, tripropargyl phosphate, tris(trimethylsilyl)borate, (ethoxy)pentafluorocyclotriphosphazene, tetrafluoro(picolinato)phosphate, 1,3-dimethyl-1,3-divinyl-1,3-di(1,1,1,3,3,3-hexafluoroisopropyl)disiloxane, N,N'-carbonylbis(N-methylsulfamoyl fluoride), tetravinylsilane, trivinylmethylsilane, t-butylbenzene, t-amylbenzene, fluorobenzene, and cyclohexylbenzene.

**13.** A nonaqueous electrolyte solution battery, comprising at least:

a positive electrode;
a negative electrode;
a separator; and
the nonaqueous electrolyte solution according to any one of claims 1 to 12.

## INTERNATIONAL SEARCH REPORT

International application No.
**PCT/JP2024/035625**

**A. CLASSIFICATION OF SUBJECT MATTER**

***H01M 10/0567***(2010.01)i; ***H01M 10/052***(2010.01)i; ***H01M 10/0568***(2010.01)i; ***H01M 10/0569***(2010.01)i
FI: H01M10/0567; H01M10/052; H01M10/0568; H01M10/0569

According to International Patent Classification (IPC) or to both national classification and IPC

**B. FIELDS SEARCHED**

Minimum documentation searched (classification system followed by classification symbols)

H01M10/0567; H01M10/052; H01M10/0568; H01M10/0569

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2018-035060 A (MORITA KAGAKU KOGYO KABUSHIKI KAISHA) 08 March 2018 (2018-03-08) claims | 1-13 |
| A | WO 2005/104289 A1 (BRIDGESTONE CORPORATION) 03 November 2005 (2005-11-03) claims | 1-13 |
| A | WO 2017/111143 A1 (CENTRAL GLASS CO., LTD.) 29 June 2017 (2017-06-29) claims | 1-13 |
| A | JP 2020-087825 A (KABUSHIKI KAISHA TOYOTA JIDOSHOKKI) 04 June 2020 (2020-06-04) claims | 1-13 |
| A | CN 109422252 A (DONGGUAN DONGYANG SOLAR SCIENCES RESEARCH & DEVELOPMENT CO., LTD.) 05 March 2019 (2019-03-05) claims | 1-13 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 December 2024** | **17 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035625**

| Patent document cited in search report | Publication date (day/month/year) | Patent family member(s) | Publication date (day/month/year) |
|---|---|---|---|
| JP 2018-035060 A | 08 March 2018 | US 2019/0152792 A1 claims<br>EP 3466871 A1<br>KR 10-2019-0002543 A<br>CN 109311669 A | |
| WO 2005/104289 A1 | 03 November 2005 | US 2007/0202417 A1 claims<br>EP 1739784 A1<br>CN 1943070 A | |
| WO 2017/111143 A1 | 29 June 2017 | US 2018/0375158 A1 claims<br>EP 3396771 A1<br>KR 10-2018-0089530 A<br>CN 108475824 A | |
| JP 2020-087825 A | 04 June 2020 | (Family: none) | |
| CN 109422252 A | 05 March 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H11067270 A
- JP 2013152956 A
- JP 2002110235 A
- JP 2011222193 A
- JP 2016157679 A
- WO 2005104289 A
- JP 2020087825 A
- WO 2021015264 A
- JP 2023174648 A